## Europäisches Patentamt

## European Patent Office

## Office européen des brevets

(11) Publication number:

**0 080 849**

**B1**

(12) **EUROPEAN PATENT SPECIFICATION**

(45) Date of publication of patent specification: **20.01.88**

(21) Application number: **82306208.8**

(22) Date of filing: **22.11.82**

(51) Int. Cl.⁴: **B 64 D 13/02**

(54) **Enclosure pressurisation control system.**

(30) Priority: **25.11.81 US 325089**

(43) Date of publication of application:
**08.06.83 Bulletin 83/23**

(45) Publication of the grant of the patent:
**20.01.88 Bulletin 88/03**

(84) Designated Contracting States:
**DE FR GB IT NL SE**

(56) References cited:
**GB-A-1 128 936**
**GB-A-1 128 937**
**US-A-3 141 399**
**US-A-4 130 051**

(73) Proprietor: **THE GARRETT CORPORATION**
**9851-9951 Sepulveda Boulevard P.O. Box 92248**
**Los Angeles, California 90009 (US)**

(72) Inventor: **Wong, Paul P.**
**27322 Warrior Drive**
**Rancho Palos Verdes California 90274 (US)**
Inventor: **Lippold, John B.**
**6792 Spickard Drive**
**Huntington Beach California 92647 (US)**
Inventor: **Burgess, Glenn A.**
**9647 Clancey Avenue**
**Downey California 90240 (US)**

(74) Representative: **Arthur, George Fitzgerald et al**
**KILBURN & STRODE 30, John Street**
**London WC1N 2DD (GB)**

Courier Press, Leamington Spa, England.

## Description

The present invention relates to systems for controlling the air or gas pressure within an enclosure particularly but not exclusively the air pressure within an aircraft cabin. The invention may be used to control the air pressure in such an enclosure to ensure passenger comfort and safety, and may include digital systems for monitoring and testing system components to provide fail-safe operation.

More particularly the present invention relates to an apparatus for controlling air pressure in an air-filled enclosure as specified in the preamble of independent claim 1, for example as disclosed in GB—A—1 128 936 and GB—A—1 128 937. The invention further relates to a system and a method for controlling the rate of change of gas pressure in an enclosure, and to a method for controlling air pressure in an aircraft cabin.

Control of aircraft cabin air pressure is important both for the comfort of passengers and crew and for safe aircraft operation. Many present-day aircraft fly at elevations of 10 to 11 km (35,000 feet) or higher and the cabin air pressure control system for such aircraft must provide adequate oxygen to occupants of the aircraft without permitting sudden changes in the cabin air pressure, to which the human ear is sensitive, and without developing a dangerously high pressure differential between the cabin air pressure and the ambient pressure, to prevent overstressing of the structural components of the aircraft.

Some prior art cabin pressurisation systems have the disadvantage that a member of the flight crew must periodically compare the rate of change of the cabin altimeter reading, which is related to the cabin air pressure, to the rate of change of the aircraft altimeter to ascertain whether the system is functioning properly. Many prior art cabin pressurisation systems determine the cabin air pressure based upon a setting of the take-off altitude, the cruise altitude, and the landing field altitude above sea level. However, under certain atmospheric conditions, such systems permit rapid changes in aircraft cabin pressure, which often causes discomfort to the passengers and crew due to the sensitivity of the human ear to changes in air pressure.

Prior art aircraft pressurisation systems have the added deficiency of failing to provide built-in monitoring and testing of subsystems and flight data which designers of modern aircraft require to ensure reliable operation and to minimise risks in the event of system failure.

United Aircraft Corporation's British Patents GB—A—1,128,936 and GB—A—1,128,937 describe systems for automatically controlling the flow of air to an aircraft cabin in accordance with a predetermined schedule. However, essentially the actual cabin pressure is compared with a desired pressure, and the difference or error pressure is used as the basis of control. There is provided a rate of change of cabin pressure monitor which limits the rate of change of cabin pressure to a predetermined maximum value.

Accordingly, there is a need in the art for an aircraft cabin pressurisation system which requires minimal attention from the crew, which maintains constant pressure under adverse atmospheric conditions and sudden, small changes in aircraft altitude, and which includes means for monitoring and testing critical components within the system to ensure safe, reliable operation.

The object of this invention is to overcome these deficiencies of prior art cabin pressurisation systems and to provide an improved system which meets the safety, reliability and human comfort standards for modern aircraft.

According to the present invention this object is met by the features specified in the independent claims 1, 15, 16 and 17.

Particular embodiments of the invention are specified in the dependent claims.

Thus, in the case of an aircraft cabin pressurisation system, the invention enables the system to control cabin pressure in such a way as to safeguard the passengers against any unduly rapid changes in cabin pressure arising in the event of sudden changes in aircraft altitude.

The means for providing an actual pressure rate signal may include pressure sensor means for providing an actual air pressure signal indicative of the actual air pressure in the enclosure and means for producing an actual pressure rate signal which is proportional to the rate of change of the actual pressure in the enclosure. A rate amplifier may be provided for amplifying the actual pressure rate signal.

In the apparatus of the invention, the means for providing a commanded pressure rate signal may include: computing means; means connected to the computing means for providing a signal thereto indicative of the ambient air pressure; multiplexer means connected to the said computing means for selectively inputting the actual pressure signal and the actual pressure rate signal thereto, the computing means being programmed to compute a said commanded pressure rate signal which will maintain a predetermined scheduled relationship between the actual air pressure in the enclosure and the ambient air pressure; and means for supplying output signals from the computing means to the means for producing a pressure rate error signal.

The said means for providing a signal indicative of the ambient air pressure may include air data receiving means for receiving and storing signals indicative of aircraft flight data, the air data receiving means outputting a receiver full signal after storing flight data signals; and an OR gate connected to the air data receiver, the OR gate being responsive to the receiver full signal to supply an interrupt signal to the computing means for interrupting operation thereof to cause the computing means to read air data signals stored in the air data receiver.

The said means for supplying output signals from the computing means to the means for producing the pressure rate error signal may include: a digital-to-analog converter means connected to an output of the computing means; a sample-and-hold circuit connected to an output of the digital-to-analog converter; and address decoder means connected to an output of the computing means for selectively applying a trigger signal to the sample-and-hold circuit to cause the sample-and-hold circuit to sample-and-hold the output of the digital-to-analog converter whenever the output thereof is a said commanded pressure rate signal.

The said means for producing a pressure rate error signal may include: a first summing circuit having a first input connected to the rate amplifier means and having a second input connected to the sample-and-hold circuit, the first summing circuit producing an output which is a function of the difference between the actual and commanded rates of change of air pressure within the enclosure.

In a preferred construction of the apparatus of the invention, the means responsive to the pressure rate signal for regulating flow of air through the enclosure may include: an outflow valve whose operative position is variable between open and closed and controls the said flow of air; an actuator motor connected to the outflow valve; means for supplying electrical energy to the actuator motor; and means for controlling application of electrical energy to the actuator motor to cause it to control the operative position of the outflow valve.

The apparatus of the invention may further include means for providing a maximum pressure rate signal indicative of a selected maximum permissible rate of change of actual air pressure in the enclosure; and means for utilising the maximum pressure rate signal to prevent the rate of change of actual air pressure in the enclosure from exceeding the said maximum permissible rate.

In the case where the enclosure is an aircraft cabin, the apparatus of the invention may further include means for providing a signal indicative of a selected landing field altitude; and means responsive to the landing field altitude signal and to the maximum pressure rate signal for maintaining a predetermined schedule of cabin air pressure in relation to ambient air pressure.

This feature enables the cabin pressure to be automatically adjusted to the ambient pressure prevailing at the landing field, prior to the opening of the aircraft cabin door after landing, whilst at the same time avoiding any excessively rapid changes in cabin pressure.

From yet another aspect the invention resides in a system for controlling the rate of change of gas pressure in an enclosure, characterised by means for sensing the the actual rate of change of gas pressure within the enclosure; means for generating a pressure rate error signal, said pressure rate error signal being a function of the sensed actual rate and a desired rate of change of gas pressure; and means for regulating gas flow through said enclosure in response to said rate error signal to maintain the actual rate of change of gas pressure at said desired rate of change of gas pressure.

According to the present invention, from yet another aspect, a method for controlling the rate of change of gas pressure in an enclosure is characterised by the steps of: sensing the actual rate of change of pressure in the enclosure; generating a pressure rate error signal by comparing the sensed actual rate to a desired rate of change of pressure; and regulating gas flow through said enclosure in response to said rate error signal to maintain the actual rate of change of pressure at said desired rate of change of pressure.

From yet another aspect the invention comprises a method for controlling air pressure in an aircraft cabin, characterised by the steps of: setting a landing field altitude selector to provide a signal indicative of a predetermined landing field altitude; setting an autorate limit selector to provide a signal indicative of a predetermined maximum permissible rate of change of cabin air pressure; sensing the air pressure within the cabin to obtain a signal indicative of the actual cabin air pressure; producing a signal indicative of the actual rate of change of cabin pressure; receiving a signal indicative of the ambient air pressure; and regulating the position of an outflow valve in response to the landing field altitude signal, the actual cabin air pressure signal, the maximum permissible rate of change of cabin air pressure and the ambient pressure.

The various aspects and features of the invention outlined above individually and collectively enable an aircraft cabin pressurisation system to be provided which will automatically regulate cabin pressure in a manner greatly superior to that the prior art systems. The only required manual inputs to the system may be the selection prior to take-off of landing field altitude and of the maximum permitted rate of change of cabin air pressure. The system may require no in-flight changes unless the landing destination is changed, and enables passenger comfort to be maximised since the system maintains low rates of cabin pressure change without regard to changes in aircraft altitude and ambient pressure. The system logic is self-adapting to the aircraft flight profile to prohibit exposure of the aircraft crew and passengers to low-pressure effects of high cabin altitudes.

The system may include a cruise altitude controller to allow apparent cabin altitude to remain constant during cruising conditions with atmospheric altitude variations of up to plus or minus 500 feet. When the cruise altitude controller senses that the aircraft altitude change is within selected limits, the system clamps to a scheduled value of cabin altitude, which becomes the commanded cabin altitude. The apparatus cabin altitude remains constant regardless of aircraft altitude change due to turbulence, variations in ambient air pressure, etc., until the aircraft has climbed or descended a predetermined height from the altitude at which the cruise control was imposed or until the difference between the cabin pressure and the ambient pressure reaches a predetermined limit. If the aircraft cruise altitude drifts beyond the predetermined limits, the cruise altitude controller unclamps, and the cabin pressure climbs or descends at a controlled rate to the scheduled value for the new altitude.

The invention may be put into practice in various ways, but one specific embodiment thereof will now be described by way of example, only and with reference to the accompanying drawings, in which:—

FIGURE 1 is a simplified block diagram of an aircraft cabin pressurisation system embodying the present invention;

FIGURES 2A—2C are detailed block diagrams of the system of Figure 1;

FIGURE 3 is a functional block diagram illustrating outputs of the central processing unit of Figure 2B;

FIGURE 4 is a diagram of a control panel used in conjunction with the system of Figures 2A—2C;

FIGURE 5 is a graph of a schedule of cabin altitude versus aircraft altitude;

FIGURE 6 is a graph representing the changes in cabin air pressure from door closures to take-off;

FIGURE 7 is a graph illustrating a representative flight profile and corresponding cabin altitude profile generated by the system of Figures 1—4 for a flight from Los Angeles to Chicago.

FIGURE 8 is a mode selection control flow diagram;

FIGURE 9 is a standby mode flow diagram;

FIGURE 10 is a ground mode flow diagram;

FIGURE 11 is a take-off mode flow diagram;

FIGURES 12A—12E are auto-flight mode flow diagrams;

FIGURES 13A and 13B are auto-flight pressure rate control flow diagrams;

FIGURE 14 is a landing mode flow diagram;

FIGURE 15 is a ground mode flow diagram; and

FIGURE 16 is a ground test flow diagram.

The illustrated embodiment of the invention provides an aircraft cabin pressurisation system which operates automatically to maintain the cabin pressure and its rate of change at suitable controlled levels throughout a complete flight, including take-off and landing, with minimal attention from the aircraft crew.

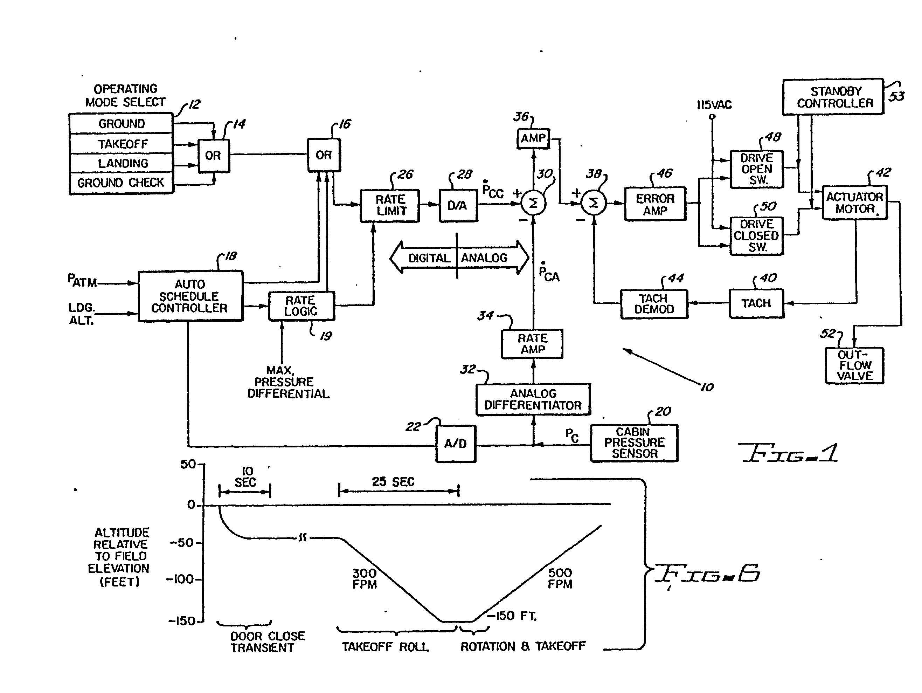

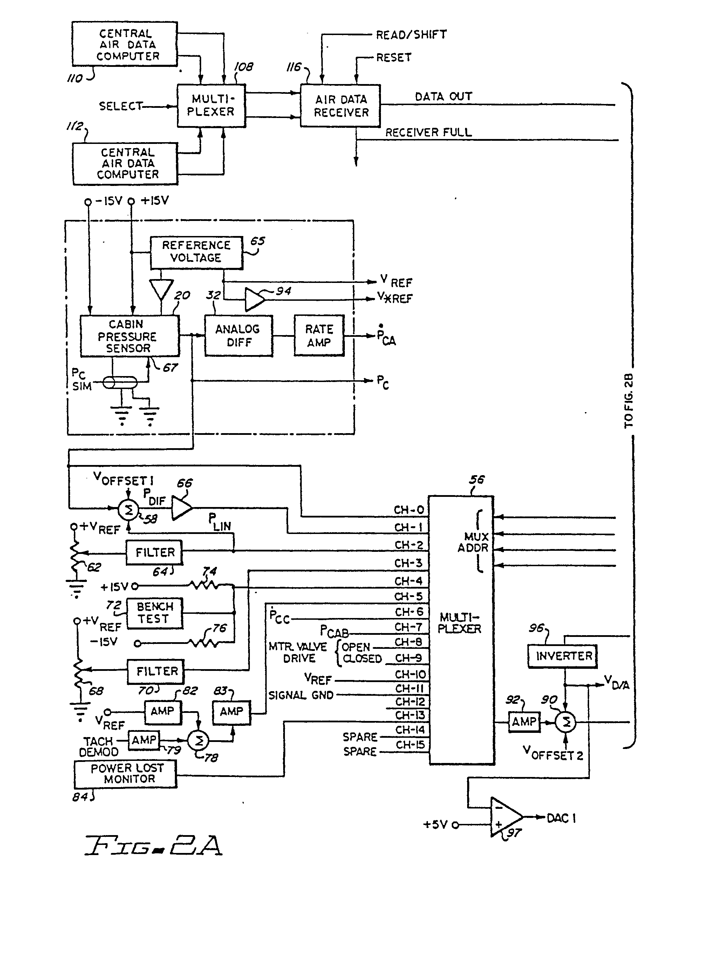

Referring to Figure 1, the complete pressurisation system is provided with duplicated pressurisation control systems 10, each embodying the invention and each includes an operating mode selector 12, which supplies signals indicative of aircraft operations on the ground prior to take-off, during take-off, and during landing, and a ground check after landing, to an OR gate 14, which outputs a signal to an OR gate 16 upon receipt of a signal from the operating mode selector 12. The automatic mode of operation includes an auto schedule controller 18, which outputs signals to the OR gate 16 for controlling the cabin air pressure as a function of the ambient atmospheric pressure, the landing altitude, and the actual cabin air pressure. A cabin pressure sensor 20 outputs a signal $P_C$ indicative of the actual cabin air pressure to the autoschedule controller 18 through an analog-to-digital converter 22. The rate logic circuit 19 receive an input indicative of the maximum allowable pressure differential between the ambient atmospheric pressure and the actual cabin pressure in addition to receiving a signal from the autoschedule controller 18. The rate logic circuit 19 provides outputs to the OR gate 16 and to a rate limit circuit 26 which also receives an input from the OR gate 16. The output signal of the rate logic circuit 19 indicates either the actual differential between the cabin pressure and the ambient pressure or the maximum permissible differential between the cabin pressure and the ambient pressure. The rate limit circuit 26 computes the commanded rate of change of cabin pressure for the particular aircraft operating mode indicated by the operating mode selector 12. A digital-to-analog converter 28 receives the digital output signal of the rate limit circuit 26 and inputs an analog signal $P_{CC}$ indicative of the commanded rate of change of cabin pressure to a summing circuit 30. An analog differentiator 32 connected to the output $P_C$ of the cabin pressure sensor 20 differentiates the actual cabin pressure and provides a signal indicative of the actual rate of change of cabin pressure to a rate amplifier 34, which supplies a signal $P_{CA}$ indicative of the actual rate of change of cabin pressure to the summing circuit 30. The summing circuit 30 outputs a signal indicative of the difference between commanded rate of change of cabin pressure and the actual rate of change of cabin pressure to an amplifier 36, which provides an input signal to a summing circuit 38.

A tachometer 40 provides a signal indicative of the speed of an actuator motor 42 to the summing circuit 38 through a tachometer demodulator circuit 44. An error amplifier 46 amplifies the output of the summing circuit 38 and outputs a signal for driving the actuator motor 42 through either a drive open switch 48 or a drive closed switch 50, with the sign of the error determining whether the error amplifier 46 actuates the drive open switch 48 or the drive closed switch 50. A flow of compressed air at suitable controlled pressure and temperature is admitted into the cabin through a flight in the conventional manner, and the actuator motor 42 controls a valve 52 to determine the rate at which air flows from the aircraft cabin, thereby controlling the cabin air pressure.

If a failure occurs, in the above described circuitry, a standby controller 53, having structure identical to the above described circuitry assumes control of the actuator motor 42.

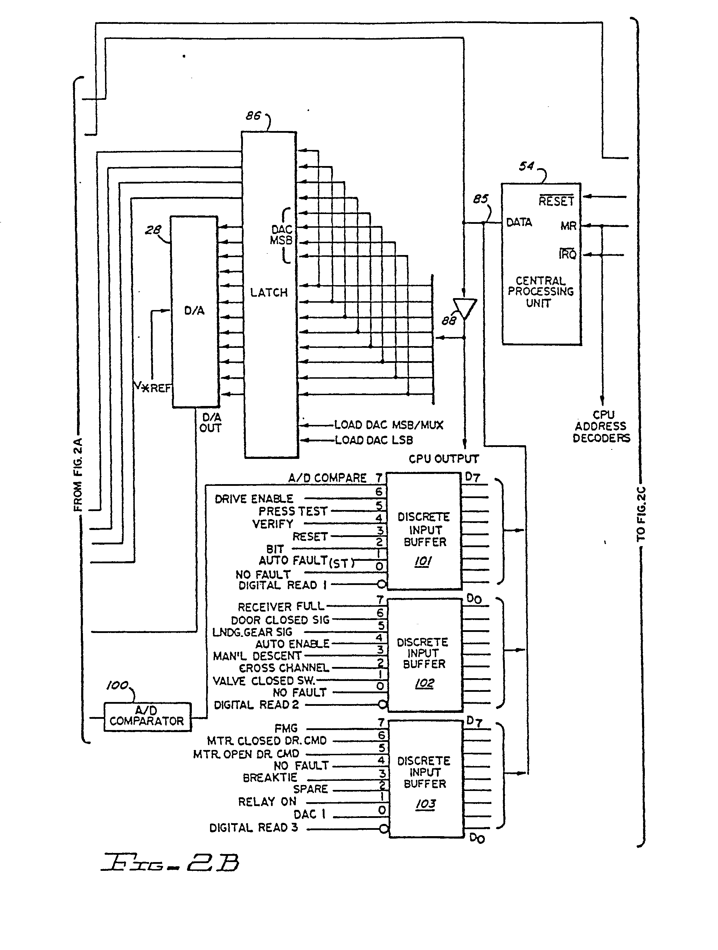

The block diagram of Figure 2 indicates the input and output signals from a central processing unit 54 used to control the operation of the valve 52 (not shown in Figure 2). The cabin pressure sensor 20, which receives +15 volt and −15 volt inputs from a power supply 60, senses the cabin pressure and outputs a signal $P_C$ indicative thereof to channel zero of an analog multiplexer 56, which receives a plurality of analog signals which are selectively converted into digital form and input to the central processing unit 54 for processing thereby. The output signal $P_C$ of the cabin pressure sensor 20 is also connected to a first input of a summer 58. A second input of the summer 58 receives an offset voltage $V_{OFFSET1}$ from a power supply 60; and a third input of the summer 58 receives a signal $P_{LIN}$, which is a linear approximation of landing field altitude, from a potentiometer 62 through a filter 64. The potentiometer 62 produces the signal $P_{LIN}$ by dividing a voltage $V_{REF}$ input from a voltage reference source 65. The summer 58 outputs a signal $P_{DIF}$, indicative of the offset difference between the linear approximation of landing field altitude $P_{LIN}$ and the cabin pressure $P_C$ to an amplifier 66, whose output is connected to input channel 1 of the analog multiplexer 56. The cabin pressure sensor 20 also includes an input terminal 67 for receiving a signal $P_{CSIM}$, which is input to the system to simulate the cabin pressure during bench testing. The signal $P_{LIN}$ from the filter 64 is also connected to input channel 2 of the analog multiplexer 26.

Channel 3 of the multiplexer 56 receives an input indicative of the desired maximum rate of change of cabin pressure. A potentiometer 68 receives a voltage $V_{REF}$ from the ten volt reference source 65 and outputs a voltage to a filter 70 which is connected to channel 3 of the multiplexer 56.

Channel 4 of the multiplexer 56 serves as a test input for the ±15 volt outputs of the power supply 60 and receives a signal from a bench test selector switch 72 which instructs the central processing unit 54 to enter a bench test mode of operation. The +15 volt output of the power supply 60 is connected to channel 4 through a resistance 74 and the −15 volt output of the power supply 60 is connected to channel 4 through a resistance 76.

Channel 5 of the multiplexer 56 receives a signal indicative of the speed of the actuator motor 40 (not shown in Figure 2). A summer 78 receives an output from the tachometer demodulator 44 (not shown) through an amplifier 79 and receives an amplified reference voltage from the voltage reference source 65 through an amplifier 82 and outputs a signal to an amplifier 83 which has the output thereof connected to channel 5 of the multiplexer 56.

Channel 6 of the multiplexer 56 receives an input indicative of the commanded rate of change of cabin pressure $P_{CC}$.

Channel 7 receives an input indicative of the buffered actual rate of change of cabin pressure $P_{CAB}$.

Channel 8 of the multiplexer 56 receives a signal which indicates that the actuator motor 40 (not shown) is driving the valve 52 (not shown) open; and channel 9 receives a signal indicating that the actuator motor 40 (not shown) is driving the valve 52 (not shown) closed.

Channel 10 of multiplexer 56 receives the voltage $V_{REF}$ from the voltage reference source 65. Channel 11 receives an internal reference ground signal. Channels 12, 14, and 15 are spares. Channel 13 receives an input from a power lost monitor 84 which monitors the five volt output from the power supply 60.

In order to read the analog signal input to a particular channel of the multiplexer 56, the central processing unit 54 first addresses the channel through a latch 86, thereby causing the addressed channel to provide a multiplexer output voltage to a summing circuit 90 through a buffer amplifier 92. The central processing unit 54 has a DATA driver connected to a DATA bus 85 from which data output signals are supplied to the latch 86 through a data buffer amplifier 88. The latch 86 has four outputs connected to the address terminals of the multiplexer 56 of selectively addressing input channels 0 to 16 thereof.

The central processing unit 54 also outputs a digital signal indicative of a predetermined voltage through the latch 86 to the digital-to-analog converter 28. The digital-to-analog converter 28, which receives a voltage $V_{*REF}$ from the reference voltage source 65 through an amplifier 94, converts the digital signal to a corresponding voltage. An inverter 96 inverts the output voltage of the digital-to-analog converter 28 and provides a voltage $V_{D/A}$ to the summing circuit 90, to a comparator 97, and to a sample-and-hold circuit 98.

The summing circuit 90 receives an offset voltage-input, and the output of the summing circuit 90 is a voltage indicative of the offset difference between the voltage input to the addressed channel to the multiplexer 56 and the voltage output of the digital-to-analog converter 28. An analog-to-digital comparator 100 receives the output of the summing circuit 90 and outputs a digital signal indicative of whether the output of the summing circuit 90 is positive or negative to input port 7 of a discrete input buffer 101.

The system may include additional discrete input buffers 102 and 103, which provide to the central processing unit 54 digital signals indicative of the status of selected flight variables and for self-testing of selected conditions within the cabin air pressure control system. For example, the output DAC 1 of the comparator 97 is connected to input port 0 of discrete input buffer 102 to test whether the output of the inverter 96 exceeds 5V.

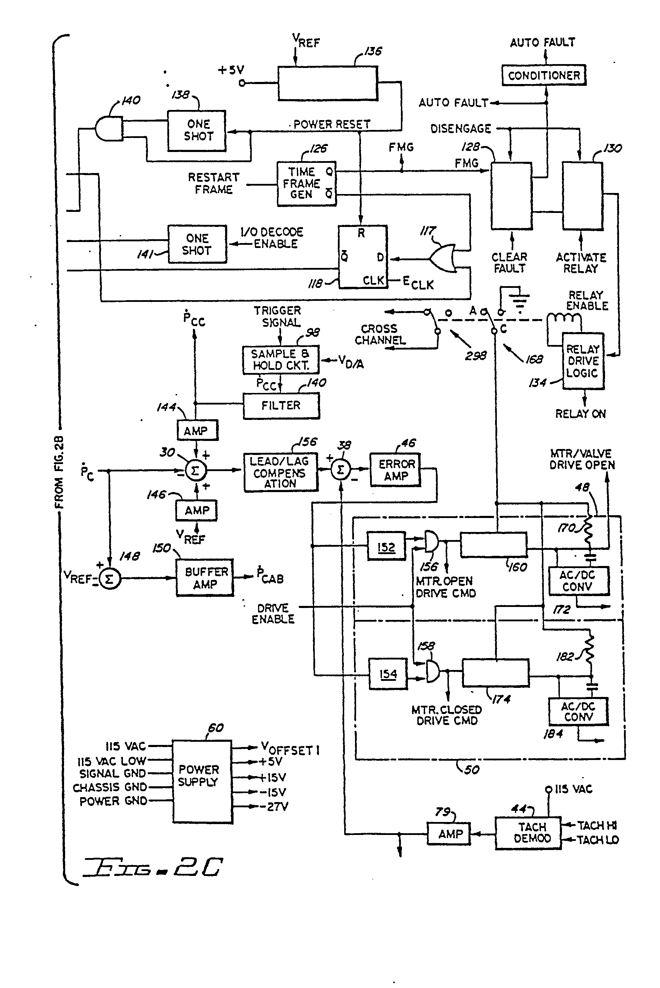

In the illustrated embodiment, each of the discrete input buffers 101, 102, and 103 includes eight data bits numbered 0—7, and each of the discrete buffers 101, 102, and 103 includes a digital read enable for selectively causing the data bits to be input to the central processing unit 54. The central processing unit 54 addresses the discrete input buffers 101—103 by means of digital read signals from output ports 4, 3, and 2, respectively, of an address decoder 104, shown in Figure 3.

In order to complete the process of reading an addressed channel of the multiplexer 56, the central processing unit 54 outputs a digital read signal from output port 4 of the address decoder 104 to the digital read 1 input port of the discrete input buffer 101 (Figure 2B) to cause the signal from the analog-to-digital comparator 100 to be input to the central processing unit 54 for processing thereby.

The central processing unit 54 uses a successive approximation method to determine the voltage output of the multiplexer 56. If the output of the analog-to-digital comparator 100 indicates that the voltage $V_{D/A}$ is greater than the voltage output of the multiplexer 56, then the central processing unit 54 outputs a digital signal indicative of a second predetermined voltage to the digital-to-analog converter 28 through the latch 86.

The above-described process continues until the central processing unit 54 outputs a signal which approximates the output of the multiplexer 56 within a prescribed tolerance. The central processing unit 54 reads each channel of the multiplexer 56 by the above-described process. Additional information supplied to the central processing unit 54 through the discrete input buffers 101, 102, and 103 is described hereinafter.

It is contemplated that the present invention will be used in an aircraft which has one or more central air data computers, which provide information concerning flight variables to the cabin air pressure control system. In the illustrated embodiment, a multiplexer 108 is connected to a first central air data computer 110 and to a second central air data computer 112. The central processing unit 54 determines which of the central air data computers 110 or 112 will provide data to the aircraft cabin pressure control system, and outputs a computer select signal through output port 7 of an output buffer 113, shown in Figure 3, to the select input of the multiplexer 108.

Referring to Figures 2A, 2B, 2C, and 3, an air data receiver 116 connected to the output of the multiplexer 108 receives and conditions information words from the selected data computer 110 or 112. In a typical application, each information word received consists of 32 bits of data in a return-to-zero mode of transmission. The first 8 bits constitute an identification code for the transmitted word, with the remaining bits constituting flight data. The air data receiver 116 stores all 32 bits of data, after which it sends an interrupt signal to an OR gate 117, which supplies the interrupt signal to the INTERRUPT REQUEST input terminal IRQ of the central processing unit 54 through a flip-flop 118.

Referring to Figure 3, the central processing unit 54 has an address decoder 120 connected to the MEMORY READY terminal thereof. An address decoder 121 is connected to the address decoder 120, and the address decoder 104 is connected to the address decoder 121 to enable the central processing unit 54 to selectively address other components of the system. The air data receiver 116 has a read/shift input connected to output pin 5 of the address decoder 104 and a reset input connected to output pin 3 of the address decoder 120. The OR gate 117 also receives an input from a time frame generator 126, which periodically generates a signal for interrupting operation of the central processing unit 54.

The central processing unit 54 triggers operation of the time frame generator 126 by outputting a restart frame signal thereto through output port 2 of the address decoder, 120. The time frame generator 126 outputs a signal FMG to input port 7 of the discrete input buffer 103 and to a fault flip-flop 128. If there is an electrical fault in the system, the central processing unit 54 supplies a disengage signal to the fault flip-flop 128 and to a second flip-flop 130 through an output buffer 113. The fault-flip-flop 128 outputs an AUTO FAULT signal to input port 1 of the discrete input buffer 101 to enable the central processing unit 54 to monitor the fault flip-flop 128.

If there is no failure in the system or if the central processing unit 54 receives an input indicating clearance of a previously-existing fault, the central processing unit provides a clear fault signal to the fault flip-flop 128 through output port 7 of the address decoder 104 to permit the fault flip-flop 128 to output a signal to the flip-flop 130, which also receives an ACTIVATE RELAY signal from the central processing unit 54 via output port 7 of the address decoder 120. The flip-flop 130 produces an output signal for actuating a relay drive logic 134, which, when actuated, supplies a RELAY ON signal to input port 1 of the discrete input buffer 103. Proper operation of the system requires sequential turning on of the time frame generator 126, the fault flip-flop 128, and the flip-flop 130 to actuate the relay logic drive circuit 134. A failure in the system interrupts the above-described sequence, and the system relinquishes control of the aircraft cabin air pressure.

A power reset circuit 136 outputs a signal for resetting or turning on the system to the flip-flop 118, a one shot multivibrator 138, and an AND gate 140, which also receives an input from the one shot multivibrator 138. After the one shot 138 times out, the AND gate 140 supplies a signal to the RESET terminal of the central processing unit 54. Resetting the central processing unit 54 initializes the control parameters and prepares the system for ground mode operations. The power reset circuit 136 is energized by the voltage $V_{REF}$ from the reference voltage source 65 and a 5 volt input from the power supply 60.

The central processing unit 54 has two operational levels: foreground and background. The foreground level deals with functions and data that must be processed with timing constraint limitations, which include reading information from the air data receiver 116, updating the cabin pressure measurement input, updating the pressure rate of output, and forming certain high-priority tests. The background level deals with functions which need not be updated with stringent timing constraints, such as infrequent tests and flight mode parameters which require lengthy calculations. The central processing unit 54 ordinarily operates within a time frame set by the time frame generator 126. If the time frame generator 126 generates an interrupt signal every 50 milliseconds, the central processing unit 54 enters the foreground processing mode in response to the interrupt signal. Upon completion of foreground computations, the central processing unit 54 returns to background computations for the balance of the 50 millisecond time frame until a new timing frame interrupt signal is received by INTERRUPT REQUEST input terminal IRQ of the central processing unit 54.

The central processing unit 54 normally operates within the predetermined time frame unless the OR gate 117 receives an actuating signal from the air data receiver 116, in which event the central processing unit 54 must return to the foreground processing mode to process the data words stored in the air data receivers 116. The central processing unit 54 outputs a read/shift signal to read/shift input 122 of the air data receiver 116 through output pin 5 of the address decoder 104, which causes the air data receiver 116 to input the data word stored therein to the central processing unit 54 via the data bus 85.

There are many information inputs which may be received by the air data receiver 116, only three of which are of significance to the aircraft pressure control system. The significant inputs are barometrically corrected altitude, absolute altitude, and the barometric corrections. The central processing unit 54 requires the absolute altitude to monitor and control the pressure differential between the ambient pressure and the cabin pressure and to determine the appropriate rate of change of cabin pressure as a function of the cabin altitude schedule. Barometrically corrected altitude enables the central processing unit 54 to establish cabin air pressure in preparation for landing.

The central processing unit 54 decodes the identification code of the data word received from the air data receiver 116 to determine if the data word is relevant to aircraft pressure control system operation. If the received data word is relevant to operation of the aircraft pressure control system, the central processing unit 54 stores the data word and calculates a new cabin pressure rate command. After storing the data word, the central processing unit 54 outputs a RESET signal through pin 3 of the address decoder 120 to the reset input of the air data receiver 116 to put the air data receiver 116 in condition to receive and store additional signals which may be received from the multiplexer 108.

If the central processing unit 54 is unable to complete the foreground tasks with the predetermined time interval, an input/output strobe one-shot 141 receives an I/O decode enable signal from the central processing unit 54 through output port 1 of the address decoder 121. The input/output strobe one-shot 141 outputs a signal to the memory ready input MR of the central processing unit 54 to enable the central processing unit 54 to continue foreground tasks until the one-shot 141 times out.

Figures 2 and 3 illustrate in detail the functions of the circuitry which Figure 1 illustrates in general. In order to change the cabin air pressure, the central processing unit 54 calculates a voltage $V_{D/A}$ which corresponds to a commanded rate of change of cabin air pressure $P_{CC}$ and outputs a trigger signal from output port 2 of the output buffer 113 to the sample-and-hold circuit 98, which causes the sample-and-hold circuit 98 to read and hold for a predetermined time the signal output from the inverter 96. A filter circuit 140 filters signal $P_{CC}$ and outputs the filtered commanded rate of cabin pressure change signal to channel 6 of the multiplexer 56, and to an amplifier 144. The summing circuit 30 receives the output of the amplifier 144 and the output signal $P_{CA}$ of the rate amplifier 34 along with an input from an amplifier 146, which amplifies voltage $V_{REF}$ output from the reference voltage source 65 to provide an offset voltage.

A summing circuit 148 also receives the actual rate of change of cabin pressure signal $P_{CA}$ and the voltage $V_{REF}$ and provides a signal indicative of the actual rate of cabin pressure offset by the voltage $V_{REF}$ to a buffer amplifier 150, which provides the input $P_{CAB}$ to channel 7 of the multiplexer 56.

The summing circuit 30 provides a signal indicative of the offset difference between the commanded rate of cabin pressure change and the actual rate of cabin pressure change to the summing circuit 38 through a lead-lag compensation circuit 156. The tachometer demodulator 44 receives an energizing voltage of 115 VAC from the power supply 60 along with input signals TACH HI and TACH LO from the tachometer 40 (shown in Figure 1). The amplifier 79 amplifies the output of the tachometer demodulator 44 and provides a signal to an input of the summing circuit 38, which outputs a speed error signal for controlling operation of the actuator motor 42 (not shown).

Figure 2 illustrates details of the drive open switch 48 and the drive closed switch 50 of Figure 1. A first threshold circuit 152 and a second threshold circuit 154 receive the amplified speed error. The threshold circuit 152 provides a digital output to an AND gate 156, and the threshold circuit 156 provides a digital output to an AND gate 158. The central processing unit 54 provides a drive enable signal to the AND gates 156 and 158 through output port 4 of the output buffer 113. The configuration of the threshold circuit 152 is such that the output thereof switches from low to high when a positive speed error signal rises to a predetermined voltage, for example 1.25 volts, and switches from high to low when a positive speed error signal decreases to a predetermined voltage, for example 1.05 volts. The configuration of the threshold circuit 154 is such that the output thereof switches from low to high when a negative speed error signal drops below a predetermined value, such as −1.25 volts, and switches from high to low when a negative speed error signal rises above a predetermined value, such as −1.05 volts. Upon receipt of a logic high input from the threshold circuit 152 and the drive enable signal from the central processing unit 54, the AND gate 156 outputs a motor open drive drive command signal to input port 5 of the discrete input buffer 103 and to a solid state relay 160, which is electro-optically isolated from spurious inputs.

The relay drive logic circuit 134 controls a relay 168, which, when in the on position, provides a motor/valve drive open voltage of 115 VAC to the actuator motor 42, shown in Figure 1, through a circuit comprising the solid state relay 160 connected in parallel with a bleeder resistance 170. An AC/DC converter 172 has an input connected to the solid state relay 160 and the bleeder resistance 170 to produce a DC signal for input to channel 8 of the multiplexer 56.

Upon receipt of a logic high input from the threshold circuit 154 and the drive enable signal from the central processing unit 54, the AND gate 158 outputs a motor closed drive command signal to input port 6 of the discrete input buffer 103 and to a second solid state relay 174. The relay 168 provides a suitable motor/valve drive closed voltage to the actuator motor 42 (shown in Figure 1) through a circuit comprising the solid state relay 160 connected in parallel with a bleeder resistance 182. An AC/DC converter 184 has an input thereof connected to the solid state relay 160 and the bleeder resistance 182 to produce a DC signal for input to channel 9 of the multiplexer 56.

As shown in Figure 3, the amplifier 88 connects the data output bus 85 from the central processing unit 54 to the output buffer 113 and to an output buffer 184, each having 8 data bits numbered 0—7 for controlling various components of the system. The central processing unit 54 actuates the output buffers 113 and 184 by means of digital write signals from output ports 4 and 5, respectively, from the address decoder 120. Data bits 0 and 1 of the output buffer 113 are used during bench testing of the system. The outputs from data bits 2, 3, 4, and 7 have been previously discussed with reference to the operation of the circuitry of Figure 2. In the illustrated embodiment of the invention, the data bit output from port 3 of the output buffer 113 is a spare. The output signal from port 6 of the output buffer 113 indicates whether the valve 52 of Figure 1 is open or closed.

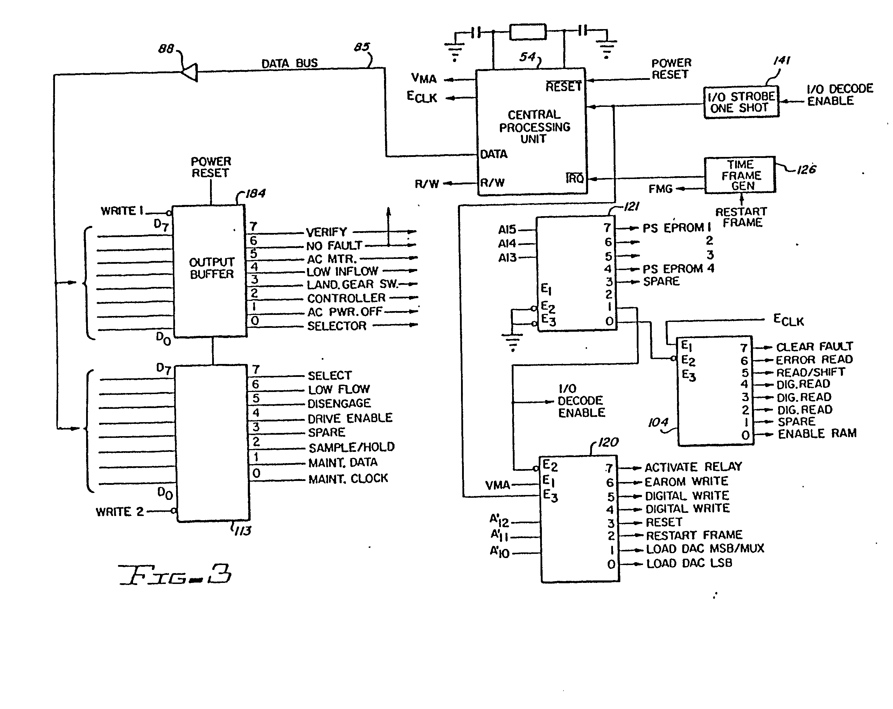

The data bits output from ports 0—7 of the output buffer 184 control an indicator panel 186, shown in Figure 4. Data bits output from ports 0—7 control a selector fault indicator 187, a power off indicator 188, a controller fault indicator 189, a landing gear fault indicator 190, a low inflow fault indicator 191, an actuator motor fault indicator 192, a no fault indicator 193, and a verify mode indicator 194, respectively.

Referring again to Figure 2, the discrete input buffer 101 has 8 input ports labeled 0—7 for receiving digital signals for input to the central processing unit 54. Input port 0 receives a no fault signal from output port 6 of the output buffer 184 in a self-test mode to verify operation of the system input and output ports. Input port 1 receives an auto fault signal from the flip-flop 128 in the self-test mode to check operability of the flip-flop 128 in the frame/clear-fault/activate relay sequence. The auto fault signal also enables the central processing unit 54 to monitor the state of an auto fail indicator 208 in the indicator panel 186 (Figure 4). Input port 2 receives a signal from the built-in test switch 196 in the indicator panel 186 for initiating the built-in test sequence. Input port 3 receives a reset signal from a reset switch 197 in the indicator panel 186. Input port 4 receives a signal from a verify switch 198, and input port 5 receives a signal from a press test switch 199 on the indicator panel 186. Input port 6 receives the drive enable signal from output port 4 of the output buffer 113 for performing operational tests within the system. Input port 7 of the discrete input buffer 101 receives the output signal of the analog-to-digital comparator 100.

Input port 0 of the discrete input buffer 102 receives a no fault signal from the no fault indicator 193. Input ports 1—6 receive signals from the valve 52 (Figure 1), a cross-channel switch 298 which is connected to the relay 168, a signal indicative of manually controlled descent, an auto enable signal indicative of whether the system is in an automatic control mode, a landing gear signal, and a door closed signal, respectively. Input port 7 of the discrete input buffer 102 receives the interrupt signal from the air data · receiver 116, which causes an interruption in operation of the central processing unit 54. By polling the signal input to port 7 of the discrete input buffer 102, the central processing unit 54 determines whether the air data receiver 116 was the source of an interrupt signal.

The output signal of the comparator 97 is input to input port 0 of the discrete input buffer 103 to enable partial testing of the digital-to-analog converter 28. The signals input to ports 1, 5, 6 and 7 have been previously described above. In the illustrated embodiment input ports 2 and 3 are spares, and input port 4 receives a no fault signal from the no fault indicator 193.

The complete system provides two auto modes and a manual mode for controlling the valve 52. In the auto modes the system positions the valve 52 in response to sensed cabin pressure according to cabin pressure control progam logic. Referring to Figure 4, in the manual mode the outflow of the valve 52 is controlled by manual inputs to a manual control knob 201 on the panel 186. The panel 186 includes an altitude between −1,000 and +15,000 feet. A high-resolution tape display 204 indicates the landing field altitude setting.

The panel 186 further includes an auto rate limit selection 206, which provides selection of the maximum cabin altitude rate of change over ranges of 30 to 1,200 sea level feet per minute while descending and 50 to 2,000 sea level feet per minute while ascending.

An auto fall annunciator 208 is illuminated when the central processing unit 54 outputs an auto fail signal.

The panel 186 also includes a valve position indicator 212 which indicates the position of the outflow valve 52.

The panel 186 further includes a mode selector 214 for selecting one of the two auto control modes or a manual mode for regulating the aircraft cabin pressure. In the manual mode, a crew member uses the manual control knob 206 to provide control signals for regulating the position of the outflow valve 52. In an auto mode, one of two identical aircraft cabin pressure control systems 10 as described hereinabove controls the aircraft cabin air pressure while the other is in a standby status receiving all inputs and performing all functions necessary for controlling the aircraft cabin air pressure, but without providing control signals to the actuator motor 42 unless the selected aircraft cabin pressure control system 10 experiences a failure.

The only crew inputs required for operation of the system in the auto mode are landing field altitude selection, and maximum rate of change of cabin air pressure, both made prior to take-off. No inflight changes are required unless landing destination is changed. The system controls the cabin air pressure according to an autoschedule, which is a family of curves of cabin altitude versus aircraft altitude.

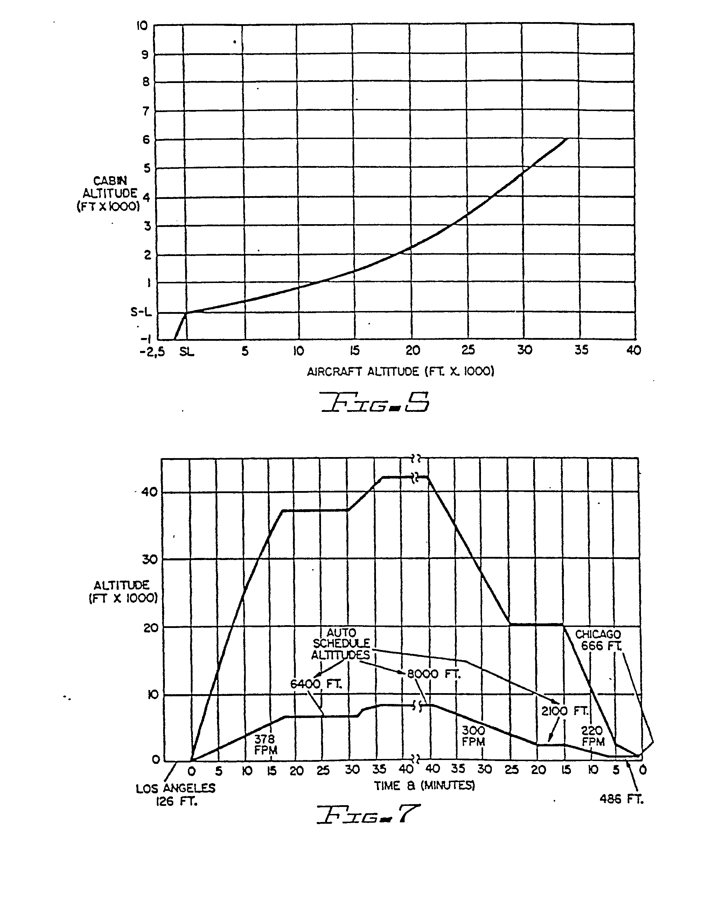

Figure 5 illustrates a typical autoschedule which enables the system to maximise passenger comfort since the autoschedule specifies low rates of cabin pressure change regardless of changes in aircraft altitude. For a given aircraft, the actual cabin altitude schedule is based on the lowest cabin altitude rate compatible with the maximum design aircraft climb rate while the aircraft is climbing to maximum altitude. In the auto mode of operation, the rate of change of cabin altitude is controlled by the smaller of either the auto schedule altitude rate or a preselected rate limit, such as 500 feet per minute while the aircraft is ascending or 300 feet per minute while the aircraft is descending.

The system provides control of cruise altitude to allow apparent cabin altitude, as indicated by the cabin air pressure, to remain constant during cruise with atmospheric altitude variations within predetermined limits. When the system senses that the aircraft altitude rate of change over a predetermined time level has not exceeded a predetermined number of feet per minute, the system clamps to the existing autoscheduled value of cabin altitude, which becomes the commanded cabin altitude. The commanded cabin altitude is maintained until the aircraft has climbed or descended 500 feet from the altitude at which the cruise control was imposed or until the differential between cabin pressure and ambient pressure reaches a predetermined limit. A typical criterion of 500 feet in two minutes is used to determine that the aircraft has reached cruise altitude. If the aircraft cruise altitude drifts sufficiently to exceed ±500 feet from the altitude at which cruise control was imposed, the cabin altitude simply unclamps and the cabin climbs or descends at a predetermined rate under the control of the central processing unit 54. Aircraft descent beyond 1,000 feet in a one minute interval triggers a descent logic sequence within the central processing unit 54, during which time the autoschedule logic remains inoperative.

The autoschedule command and cruise control logic become operative when the central processing unit 54 receives a landing gear signal from the discrete input buffer 102 indicating flight. The commanded cabin altitude is the highest of either the autoschedule value or the selected landing field altitude, unless overridden by control logic which prevents excessive differentials between the cabin pressure and the ambient pressure.

The auto cabin altitude schedule is designed to limit cabin-to-atmosphere pressure differentials to a predetermined value for a representatively rapid aircraft climb. Since lightly loaded aircraft can climb at higher rates than heavily loaded aircraft, it is possible that the crew may select a rate limit incompatible with the actual aircraft climb; therefore the central processing unit 54 includes a pressure differential limit feature to prevent the rate of change of pressure differential from exceeding a predetermined value.

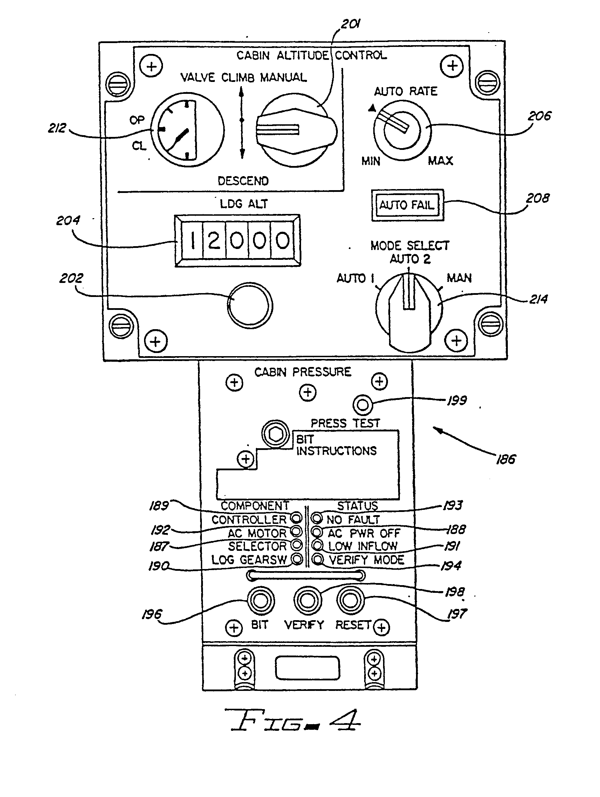

Starting with the aircraft on the ground with the fuselage doors open, the outflow valve 52 will be fully open with no power applied thereto. Aircraft cabin pressure will therefore be essentially equal to atmospheric pressure regardless of cabin air inflow. Referring to Figure 6, door closure will normally cause cabin altitude to decrease to a selected value such as 40 feet below field altitude due to pressure drop through the outflow valve 52. Just prior to take-off, prepressurization occurs at a nominal 300 foot per minute rate until the cabin pressurization attains a value corresponding to 150 feet below the field altitude. After liftoff, cabin pressure decreases at a nominal rate of 500 feet per minute until the cruise altitude logic discussed hereinabove assumes control of the cabin pressure.

Operation of the auto control logic and the autoschedule is illustrated by describing operation of the pressurisation system during a typical aircraft flight from Los Angeles to Chicago, which is typical of a flight with both take-off and landing altitudes near sea level. Referring to Figure 7, the Los Angeles to Chicago flight involves a take-off at 126 feet, a 17 minute climb to 37,000 feet, an additional 7 minute climb to 42,000 feet after a short hold period, an approximately 3 hour cruise at 43,000, a 15 minute descent to 20,000 feet with a 10 minute hold, and a 15 minute final descent to 666 feet. The crew selects the 666 foot landing altitude prior to take-off and no inflight reselections are made.

At take-off, the cabin climbs on the autoschedule at a rate of approximately 380 feet per minute. The cabin pressure holds at the scheduled value during the aircraft altitude hold at 37,000 feet and then the cabin climbs again on the autoschedule at a rate of approximately 230 feet per minute as the aircraft climbs from 37,000 feet to 42,000 feet. The cabin pressure levels out at the cruise altitude of 8,000 feet during the 42,000 foot cruise portion of the flight.

Upon aircraft descent of a 1,000 feet, the cabin pressure starts descending toward the higher of the autoschedule value or the 666 foot landing altitude selection. As the depicted schedule descent exceeds 300 sea level feet per minute, the cabin descent is rate limited at that value. As the aircraft levels off at 20,000 feet, the cabin continues down on rate limit until the schedule value is reached for the aircraft altitude of 20,000 feet.

When aircraft descent is again initiated, the cabin pressure descends on the autoschedule at a rate of approximately 220 sea level feet per minute until an altitude of 486 feet is reached, which is greater than 80 feet below the selected landing altitude. After touchdown, the cabin altitude increases at 600 feet per minute until the outflow value 52 is fully opened. During such a flight the crew would make no adjustments of the pressurisation system and cabin rate of change would be maintained within human comfort limits throughout the flight.

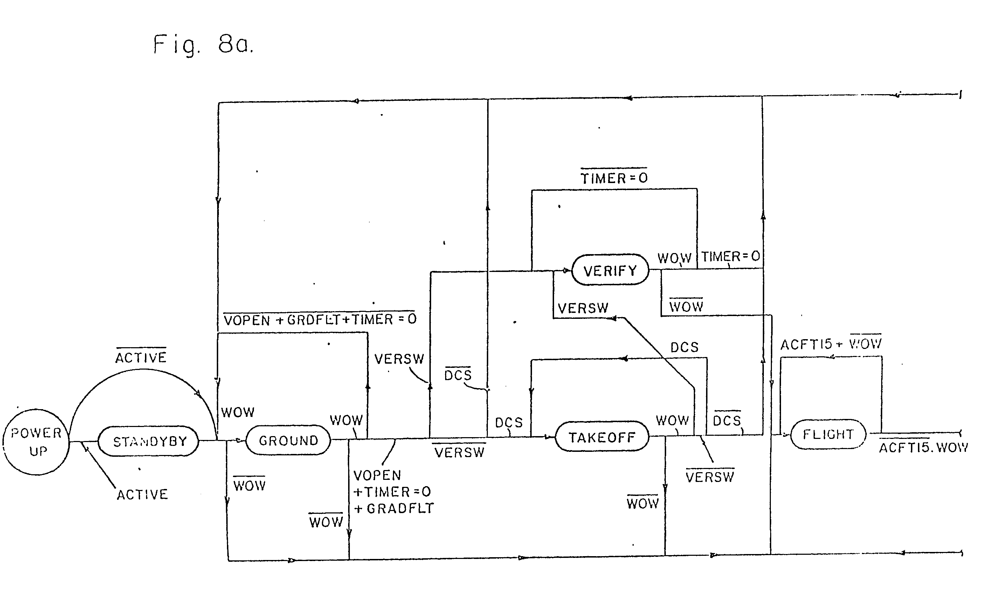

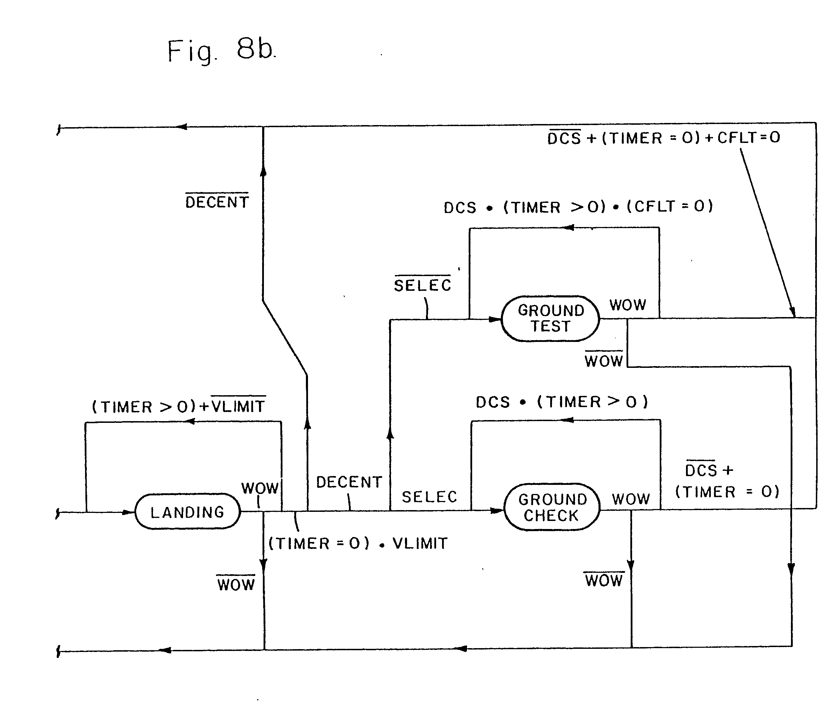

The flow diagrams shown in Figures 8—16, and the description of the structural features and functional requirements of the illustrated embodiment enable one of ordinary skill in the art to program the central processing unit 54 to practice the invention. The flow diagrams of Figures 8—16 show functional requirements which are programmed into the central processing unit 54, which may be a Motorola MC 6802 microprocessor, and do not necessarily specify the order in which computations and functional tests must be performed.

Referring to Figure 8, the central processing unit 54 enters a standby mode after being initially powered-up. After completion of the tasks of standby mode, the central processing unit 54 enters a ground mode if the discrete input buffer 102 receives a landing gear signal indicative of a high weight-on wheels signal, and if the weight-on wheels signal is low, the central processing unit 54 will enter a take off mode.

If the weight-on wheels signal goes low during ground mode execution, the central processing unit 54 transfers to the flight mode. After ground mode functions have been fulfilled and the verify mode button 194 has been depressed as indicated by a low state on input 4 of the discrete input buffer 101, the central processing unit 54 enters a verify mode. If the verify mode push button 194 has not been depressed and the throttle signal goes high, the central processing unit 54 enters the take-off mode.

The verify mode has a duration of 10 seconds after which the central processing unit 54 returns to the ground mode. A low weight-on wheels signal causes immediate exit from the verify mode into the flight mode.

The central processing unit 54 exits the take-off mode and enters the flight mode if the weight-on wheels signal goes low. Otherwise, the central processing unit 54 enters the verify mode if the verify mode push button 194 is depressed, or the ground mode if the throttle goes low.

The flight mode is entered from any other mode when a low weight-on wheels signal is sensed. According to the state of inputs from the mode selector 214 of the indicator panel 186, the central processing unit 54 will execute the automatic flight control mode or the manual control mode. The central processing unit 54 will leave the flight mode and go into a landing mode when the weight-on wheels signal goes high provided that the aircraft altitude is less than 15,000 feet. If the weight-on wheels signal goes low in the landing mode, the central processing unit 54 returns to the flight mode. If the weight-one wheels signal remains high and the valve closed signal goes low, the central processing unit 54 exits the landing mode and enters the ground mode if the descent detect flag is down. If the descent detect flag is high, the central processing unit 54 enters the ground check mode.

The central processing unit 54 will remain in the ground check mode until an internal 15 second timer, which is set upon entry into the ground check mode, times out after which the central processing unit 54 enters the ground mode. If the weight-on wheels signal goes low during ground check execution, the central processing unit 54 transfers to the flight mode.

The ground mode is entered from all of the other operating modes except the flight mode, as shown in Figure 8. In particular the ground mode is entered following completion of the standby mode checks. A no weight-on wheels condition causes an immediate exit from the ground mode, overriding any test conditions in the ground mode, and initiates the flight mode.

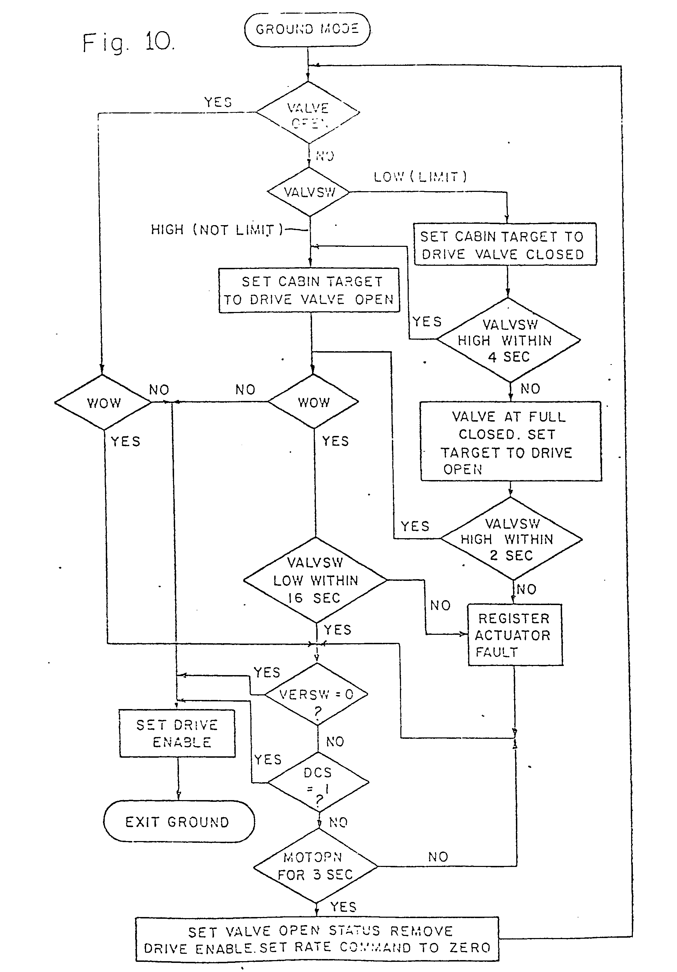

Figure 10 is a flow diagram of the ground mode. The ground mode drives and maintains the outflow valve 52 at a full-open position to prevent pressurization of the cabin, which could prevent opening of the doors of the aircraft. If the outflow valve 52 is set at an intermediate position, as indicated by the valve closed signal being at a high state, when the central processing unit 54 enters the ground mode the outflow valve 52 is driven open by setting a target cabin altitude of 16,000 feet and a decreasing pressure rate command limit of 2.162 inches of mercury per minute. When the valve closed signal goes from high to low, and the motor open drive command continues to exist for an additional 4 seconds, the outflow valve 52 is declared to be fully opened, and the rate command is set to zero while the drive enable signal is reset to zero, thereby disabling the solid state relays 160 and 174. If the valve closed signal fails to make the transition from high to low within a predetermined time, an actuator fault is declared.

If the valve closed signal is already at a low state, indicating that the valve is at a limit, and with no prior valve-open information, the central processing unit 54 must determine if the outflow 52 is at the full-closed or the full-open position. The central processing unit 54 determines the position of the outflow valve 52 by setting the target cabin altitude at −2,000 feet and setting an increasing pressure rate command limit of −1,200 feet per minute until the valve closed signal goes to a high state, or for a maximum of 2 seconds. The target cabin pressure is then set to 16,000 feet and the pressure rate command limit is set to −2.162 inches of mercury per minute. If the valve closed signal does not show a transition from a low state to a high state and back to a low state within 16 seconds, an actuator fault is declared.

If the outflow valve 52 is known to be open, the solid state relays 162 and 174 remain disabled, and the valve drive sequence and test are not repeated. The central processing unit 54 sets the drive enable on any exit from the ground mode.

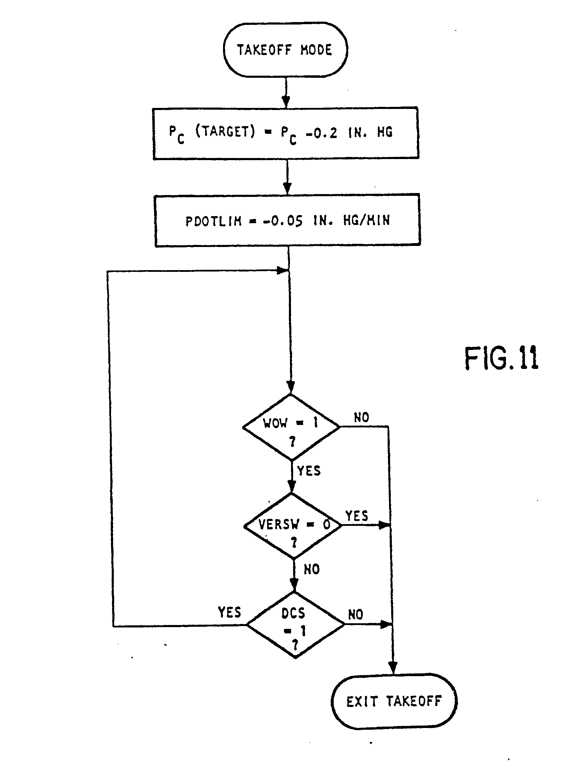

Figure 11 is a flow diagram of the take-off mode of the central processing unit 54.

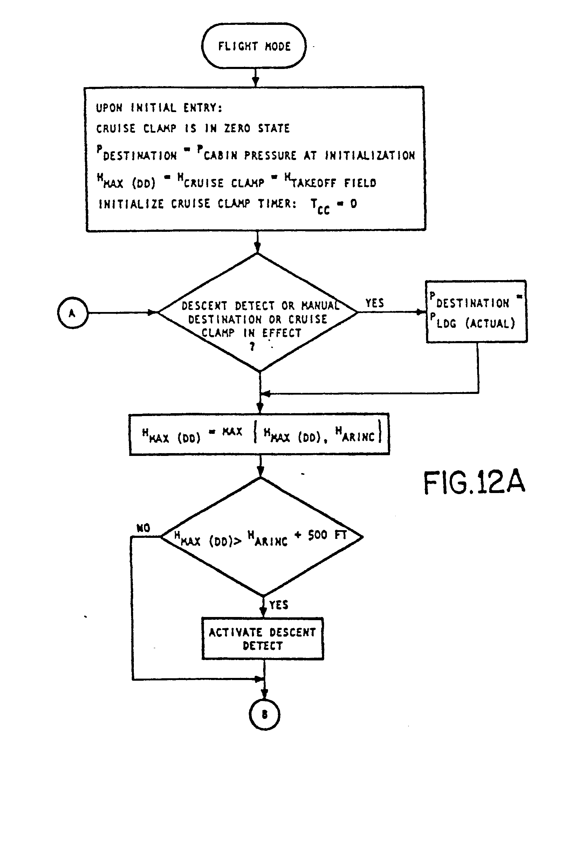

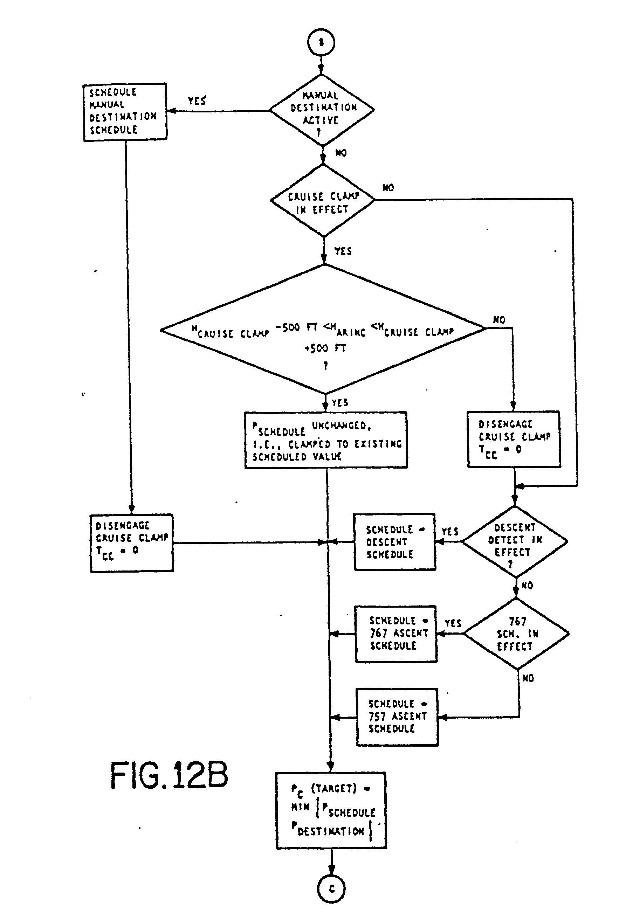

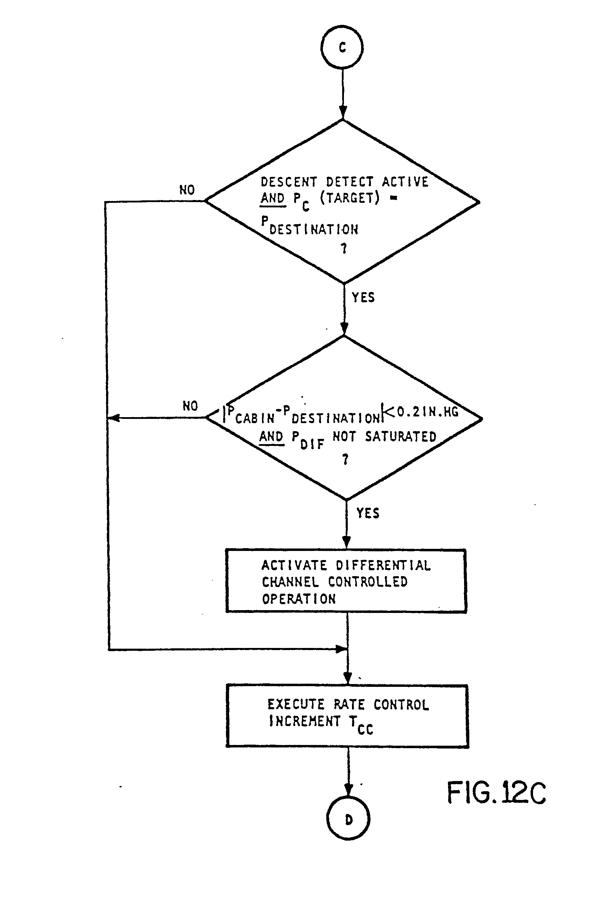

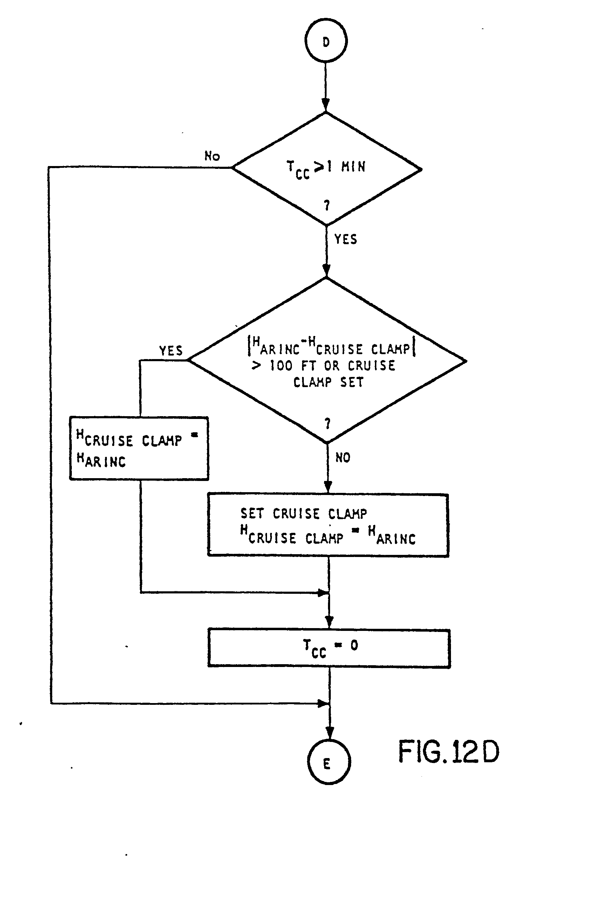

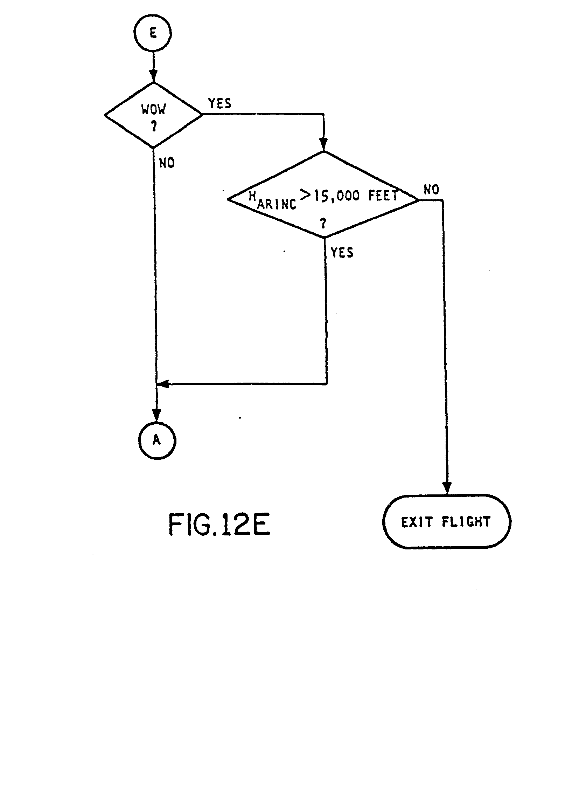

The auto-flight mode is entered whenever a NO-WOW signal is sensed. Upon initial entry into the auto-flight mode, the cruise clamp flag is in the zero state and the destination cabin pressure, $P_{DESTINATION}$, is set to the existing cabin pressure. The central processing unit 54 receives information from the air data receiver 116 for setting $H_{MAX(DD)}$) and $H_{CRUISE CLAMP}$, which serve in descent detection and cruise-clamp determining roles, respectively to the value of the takeoff field pressure as shown in Figure 12.

During the auto-flight mode, $H_{MAX(DD)}$ registers the peak value of the aircraft pressure altitude provided by the air data receiver 116. When the aircraft altitudes falls to a level 500 feet below the peak value registered by $H_{MAX(DD)}$, the descent detect flag is set and the central processing unit 54 enters the descent mode of control. The central processing unit 54 remains in the descent mode for the duration of the flight. The central processing unit 54 computes the differences between the pressure altitude and the value of $H_{CRUISE CLAMP}$ once per minute. If that difference exceeds the predetermined valve $H_{CRUISE CLAMP}$ is assigned the value of the pressure altitude. If the difference is less or equal to the predetermined value, the cruise-clamp condition becomes effective. Once the central processing unit 54 calls the cruise-clamp, $H_{CRUISE CLAMP}$ is clamped to the existing value thereof. The cruise-clamp condition will persevere until the aircraft pressure altitude goes a predetermined distance above or below the value of $H_{CRUISE CLAMP}$.

Upon initial entry into auto-flight, the destination pressure is set to the existing cabin pressure. If a power failure occurs during the auto-flight mode, the measured cabin pressure upon power-up initialisation is stored as the destination pressure. During the auto-flight mode, if any of descent detect, manual destination, or cruise-clamp have been established, the central processing unit 54 changes the destination pressure to the barometrically corrected landing field altitude pressure. The central processing unit 54 calculates the landing field altitude $H_{LFA}$ from the signal $P_{LIN}$ input into channel 2 of the multiplexer 56.·

The central processing unit 54 reads the aircraft altitude by means of inputs received from the air data receiver 116 and determines the cabin pressure as a function of that altitude and the flight status. There are two schedules incorporated in the central processing unit 54 in the automatic flight mode. As long as the descent detect flag has not been activated, an ascent schedule will be chosen and implemented. When the cruise descent detect flag is set, the central processing unit 54 enters the descent schedule. When the cruise-clamp is set, the scheduled pressure value is clamped and remains constant until the cruise-clamp is released. The central processing unit 54 compares the determined pressure value to the destination pressure after calculating the scheduled cabin pressure and taking into account the cruise-clamp status. The central processing unit 54 assigns to the target cabin pressure $P_C$ target the lower value of the determined pressure and the destination pressure.

When the aircraft approaches the landing field the central processing unit 54 implements a special homing-in routine to enable an improved accuracy in controlling the cabin air pressure to the actual landing field pressure. The homing-in routine is activated if the cabin pressure target is the destination field pressure and the descent detect mode is in effect. Under the foregoing conditions, the central processing unit 54 controls the cabin pressure to the landing field pressure. The central processing unit 54 enters the homing-in mode when the absolute value of the difference between the cabin pressure, $P_C$, and the barometrically corrected landing field pressure, $P_{LDG}$ actual, falls to less than 0.2 inches of mercury and the input to channel 1 of multiplexer 56 is in the range of 0.1 to 9.9 volts. In the homing-in mode the central processing unit 54 calculates the pressure as a function of the input to channel 1 of multiplexer 56 and the actual pressure at the landing field altitude.

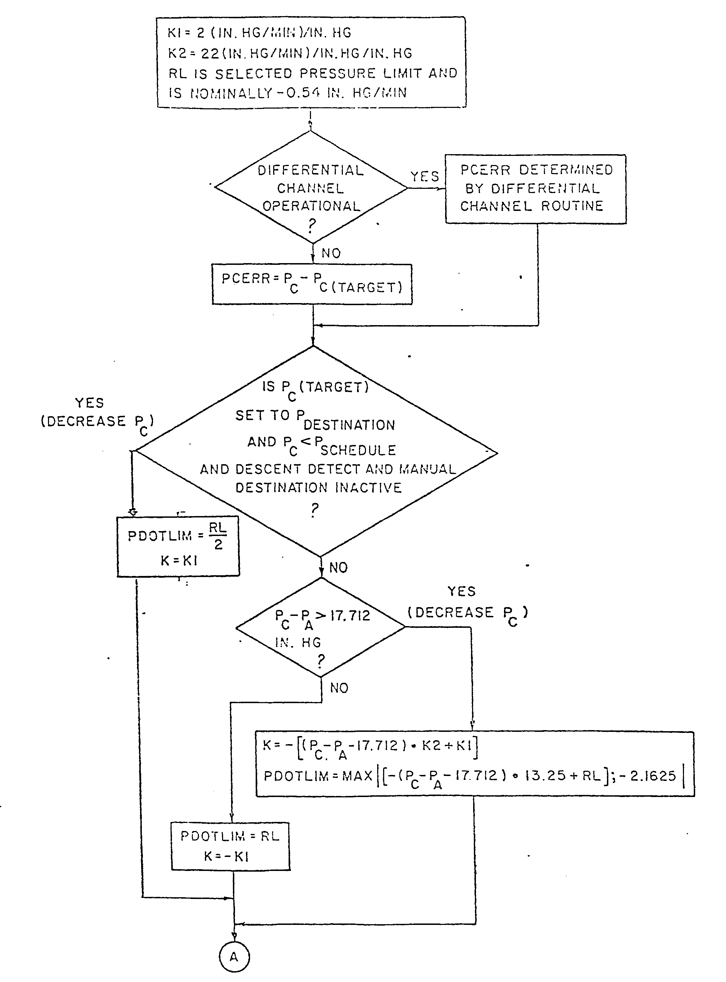

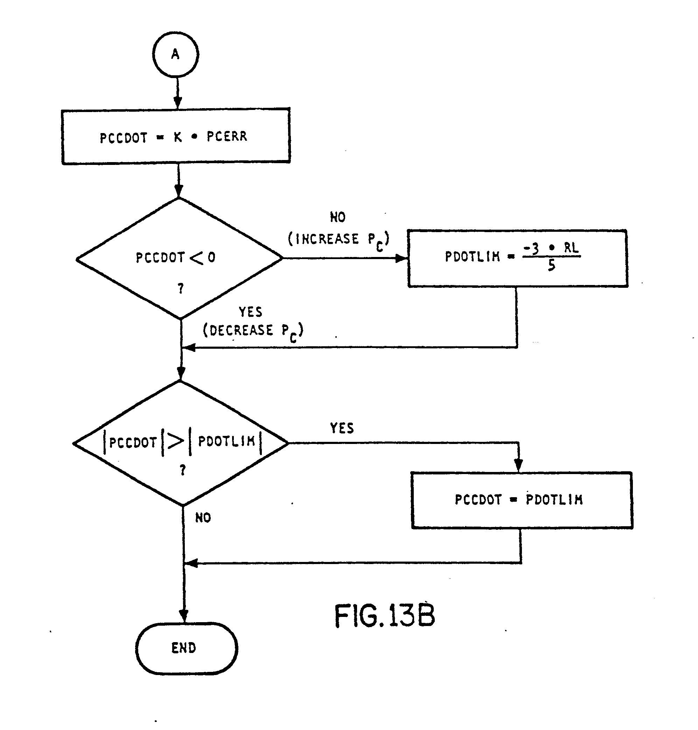

Referring to Figures 13A and B the pressure rate control determines the commanded rate of change of cabin pressure. The central processing unit 54 calculates a pressure error function, $P_{CERR}$ which is equal to $P_C − P_{C (TARGET)}$ where $P_C$ is the cabin pressure whenever the central processing unit 54 is not in the homing-in mode. When the homing-in mode is operative, $P_{CERR}$ is determined thereby. The central processing unit 54 reads the selected pressure rate limit, RL, through the rate select signal applied to channel 3 of the multiplexer 56.

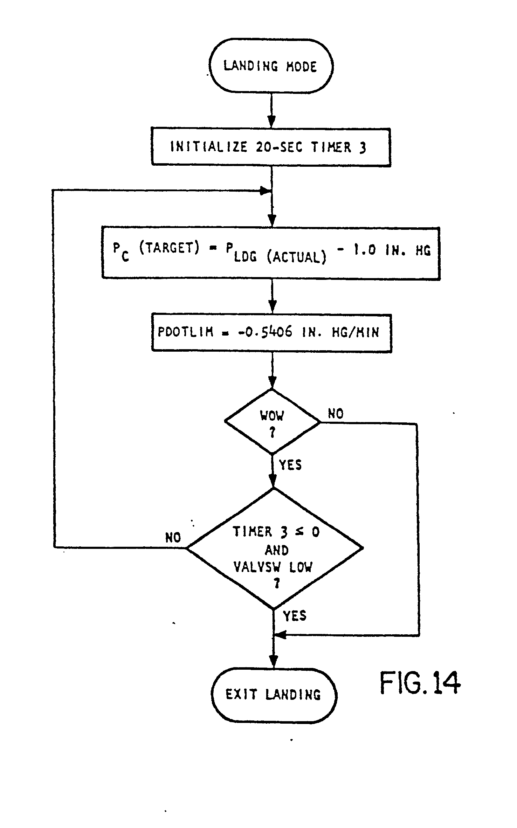

Figure 14 is a flow chart of the landing mode.

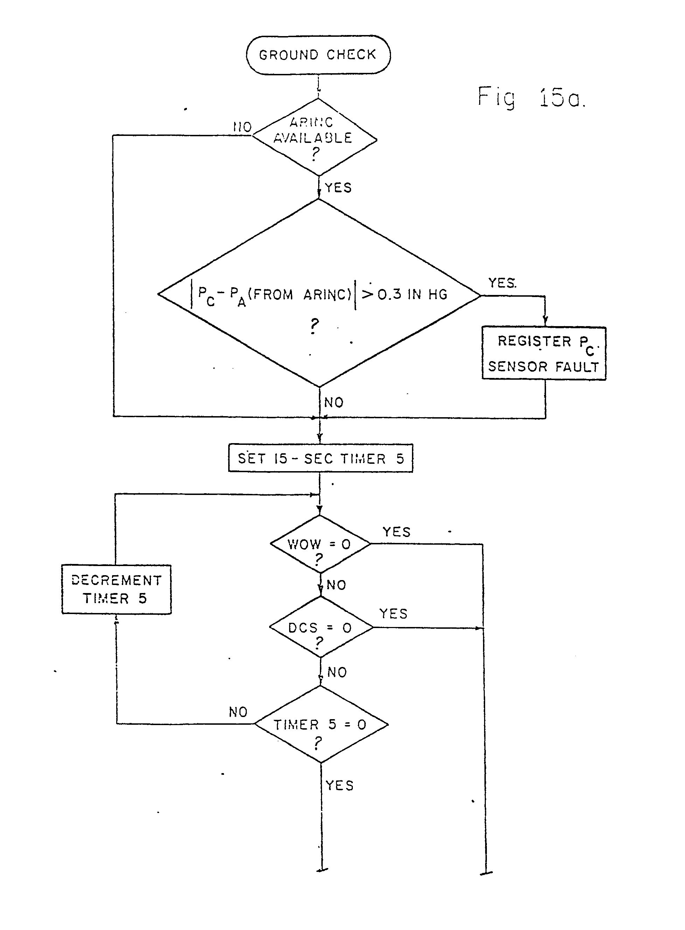

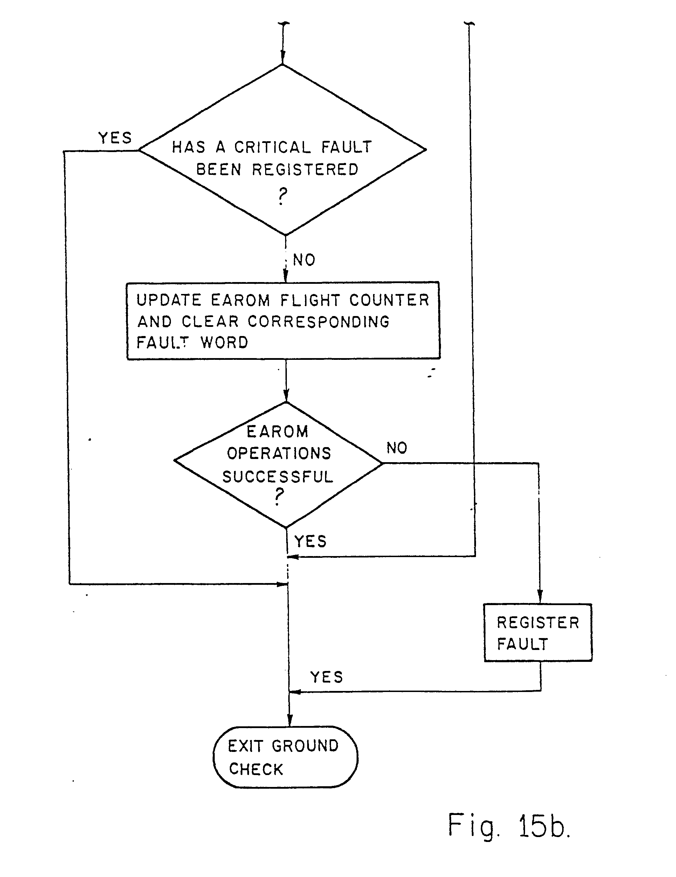

Referring to Figure 15, upon entry into the ground check mode, the central processing unit 54 compares the measured cabin air pressure to the pressure altitude supplied by the air data receiver 116, and if these pressures differ by more than 0.3 inches of mercury, a fault is flagged. If no critical faults exist, the central processing unit 54 enters the ground mode. If the weight-on wheels signal goes low, the central processing unit 54 enters the flight mode.

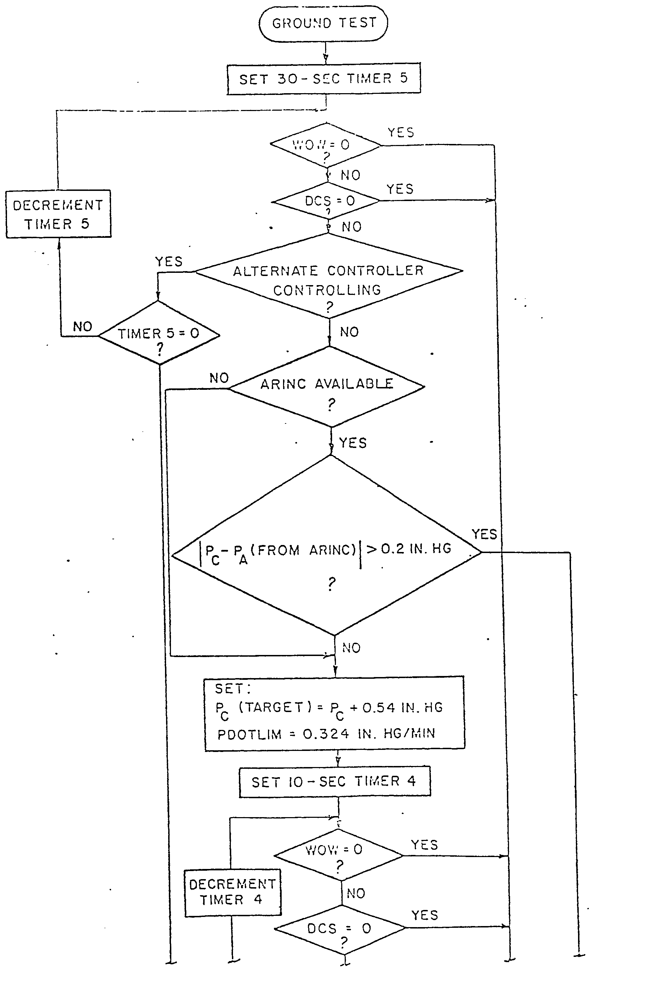

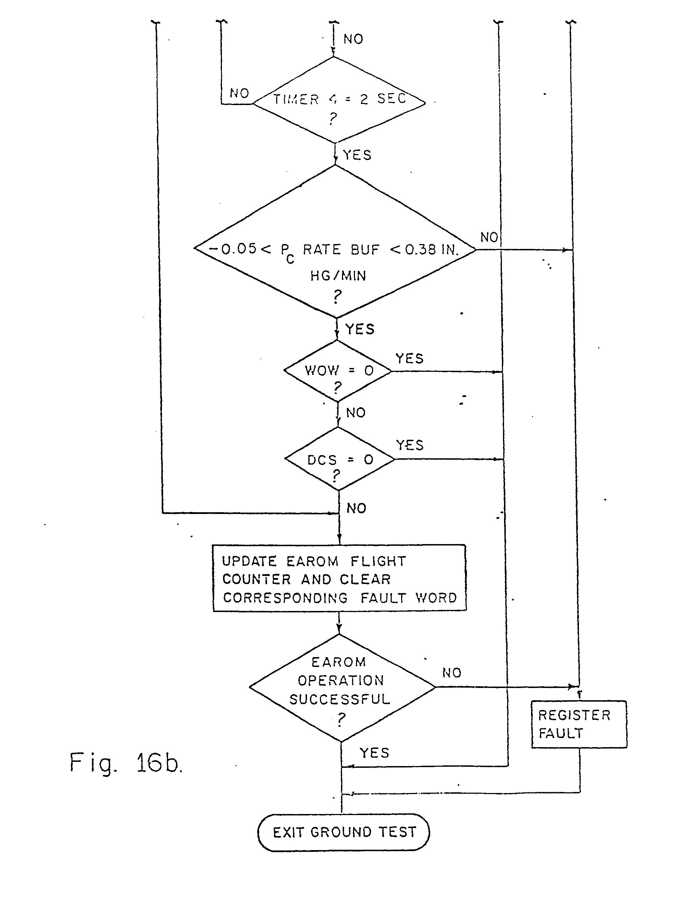

Figure 16 is a flow diagram of the ground test mode.

**Claims**

1. Apparatus for controlling air pressure in an air-filled enclosure, for example, an aircraft cabin or the like, including means (42, 52) for regulating flow of air through the enclosure to maintain the air pressure within the enclosure in conformity with a predetermined characteristic with time; characterised by: means (32) for providing an actual pressure rate signal indicative of the actual rate of change of air pressure in the enclosure; means (26) for providing a commanded pressure rate signal indicative of a commanded rate of change of air pressure in the enclosure; means (30) for deriving from said actual and commanded pressure rate signal, a pressure rate error signal which is a function of the difference between the actual and commanded rates of change of air pressure in the enclosure; and means (44, 48, 50) responsive to the pressure rate error signal for controlling the regulating means (42, 52) to control the actual rate of change of air pressure in the enclosure.

2. Apparatus according to Claim 1 wherein the means for providing an actual pressure rate includes: pressure sensor means (20) for providing an actual pressure signal indicative of the actual air pressure in the enclosure; and means (32) for producing an actual pressure rate signal which is proportional to the rate of change of the actual pressure in the enclosure.

3. Apparatus according to Claim 2 further including rate amplifier means (34) for amplifying the actual pressure rate signal.

4. Apparatus according to Claim 2 or Claim 3, wherein the means for providing a commanded pressure rate signal includes computing means (18); means connected to the computing means for providing a signal thereto indicative of the ambient air pressure; multiplexer means (108) connected to the computing means for selectively inputting the actual pressure signal and the actual pressure rate signal thereto, the computing means being programmed to compute a said commanded pressure rate signal which will maintain a predetermined scheduled relationship between the actual air pressure in the enclosure and the ambient air pressure; and means (19) for supplying output signals from the computing means to the said means for producing a pressure rate error signal.

5. Apparatus according to Claim 4 for use with an enclosure comprising an aircraft cabin; wherein the means for providing a signal indicative of the ambient air pressure includes; air data receiver means (116) for receiving and storing signals indicative of aircraft flight data, the air data receiving means outputting a receiver full signal after storing flight data signals; and an OR gate (16) connected to the air data receiver, the OR gate being responsive to the receiver full signal to supply an interrupt signal to the computing means for interrupting operation thereof to cause the computing means to read air data signals stored in the air data receiver.

6. Apparatus according to Claim 4 or Claim 5, wherein the means for supplying output signals from the computing means includes; an digital-to-analog converter (28) connected to an output of the computing means; a sample-and-hold circuit (98) connected to an output of the digital-to-analog converter; and address decoder means connected to an output of the computing means for selectively applying a trigger signal to the sample-and-hold circuit to cause the sample-and-hold circuit to sample-and-hold the output of the digital-to-analog converter whenever the output thereof is a said commanded pressure rate signal.

7. Apparatus according to Claims 3 and 6, wherein the means for producing a pressure rate error signal includes; a first summing circuit (30) having a first input connected to the rate amplifier means (34) and having a second input connected to the sample-and-hold circuit, the first summing circuit producing an output which is a function of the difference between the actual and commanded rates of change of air pressure within the enclosure.

8. Apparatus according to Claim 7 wherein the means responsive to the pressure rate signal for regulating flow of air through the enclosure includes; an outflow valve (52) whose operative position is variable between open and closed and controls the said flow of air, an actuator motor (42) connected to the outflow valve, means for supplying electrical energy to the actuator motor; and means (48, 50) for controlling application of electrical energy to the actuator motor to cause it to control the operative position of the outflow valve.

9. Apparatus according to Claim 8 further including tachometer means (40) for providing a signal indicative of the speed of the actuator motor; a second summing circuit (38) having a first input connected to the output of the first summing circuit (30) and having a second input connected to the tachometer means for receiving the actuator motor speed signal therefrom, the second summing circuit producing a speed error output signal proportional to the difference between the pressure rate error signal and the actuator motor speed signal.

10. Apparatus according to Claim 9 wherein the means for controlling application of electrical energy to the actuator motor includes; an error amplifier (46) connected to the output of the second summing circuit (38) to produce a motor drive signal; a first threshold circuit (48) connected to the error amplifier and producing an output signal for driving the outflow valve towards open whenever the motor drive signal exceeds a predetermined value; and a second threshold circuit (50) connected to the error amplifier producing an output signal for driving the outflow valve towards closed whenever the motor drive signal is less than a predetermined value.

11. Apparatus according to Claim 10 further including: a first AND gate (156) having a first input connected to the output of the first threshold circuit and a second input connected to the computing means to receive an enabling signal therefrom; and a second AND gate (158) having a first input connected to the second threshold circuit and a second input connected to the computing means to receive an enabling signal therefrom.

12. Apparatus according to any of Claims 8—11, wherein the means for supplying electrical energy to the actuator motor includes a source of electrical power; a relay (160, 168) connected between the source of electrical power and the actuator motor; and logic circuitry (134) controlled by the computing means for switching the relay for selectively applying electrical power to the actuator motor.

13. Apparatus as claimed in any one of the preceding claims, including means (68) for providing a maximum pressure rate signal indicative of a selected maximum permissible rate of change of actual air pressure in the enclosure; and means for utilising the maximum pressure rate signal to prevent the rate of change of actual air pressure in the enclosure from exceeding the said maximum permissible rate.

14. Apparatus as claimed in Claim 13, for use with an enclosure comprising the cabin of an aircraft and including; means (62) for providing a signal indicative of a selected landing field altitude; and means (56) responsive to the landing field altitude signal and to the maximum pressure rate signal for maintaining a predetermined schedule of cabin air pressure in relation to ambient air pressure.

15. A system for controlling the rate of change of gas pressure in an enclosure, characterised by means (32) for sensing the actual rate of change of gas pressure within the enclosure; means (30) for generating a pressure rate error signal, said pressure rate error signal being a function of the sensed actual rate and a desired rate of change of gas pressure; and means (42, 52) for regulating gas flow through said enclosure in response to said rate error signal to maintain the actual rate of change of gas pressure at said desired rate of change of gas pressure.

16. A method for controlling the rate of change of gas pressure in an enclosure, characterised by the steps of sensing the actual rate of change of pressure in the enclosure; generating a pressure rate error signal by comparing the sensed actual rate to a desired rate of change of pressure; and regulating gas flow through said enclosure in response to said rate error signal to maintain the actual rate of change of pressure at said desired rate of change of pressure.

17. A method for controlling air pressure in an aircraft cabin, characterised by the steps of; setting a landing field altitude selector to provide a signal indicative of a predetermined landing field altitude setting an auto rate limit selector to provide a signal indicative of a predetermined maximum permissible rate of change of cabin air pressure, sensing the air pressure within the cabin to obtain a signal indicative of the actual cabin air pressure producing a signal indicative of the actual rate of change of cabin pressure; receiving a signal indicative of the ambient air pressure; and regulating the position of an outflow valve in response to the landing field altitude signal, the actual cabin air pressure signal, the maximum permissible rate of change of cabin air pressure and the ambient pressure.

18. An apparatus, system, or method as claimed in any preceding claim in which a cruise altitude controller is responsive to the sensed aircraft altitude and operates to maintain the enclosure pressure constant in spite of variations in sensed aircraft altitude only with predetermined limits.

**Patentansprüche**

1. System zur Steuerung des Luftdruckes in einem mit Luft gefüllten Gehäuse, beispielsweise einer Flugzeugkabine oder dergl., mit einer Einrichtung (42, 52) zur Regelung des Luftstromes durch das Gehäuse, um den Luftdruck innerhalb des Gehäuses konform mit einer vorbestimmten Charakteristik in der Zeit zu halten, gekennzeichnet durch eine Einrichtung (32) zur Erzielung eines Ist-Druckgeschwindigkeitssignals, das den Istwert der Änderungsgeschwindigkeit des Luftdruckes im Gehäuse anzeigt, eine Einrichtung (26) zur Er-zielung eines Soll-Druckgeschwindigkeits-signales, das einen Sollwert der Änderungsgeschwindigkeit des Luftdruckes im Gehäuse anzeigt, eine Einrichtung (30) zur Ableitung eines Druckgeschwingigkeitsfehlersignales aus dem Ist- und dem Soll-Druckgeschwindigkeitssignals, das eine Funktion der Differenz zwischen den Istwert- und Sollwert-Änderungsgeschwindigkeiten des Luftdruckes im Gehäuse ist, und eine Einrichtung (44, 48, 50), die auf das Druckgeschwindigkeitsfehlersignal anspricht, um die Regeleinrichtung (42, 52) und damit die Istwert-Änderungsgeschwindigkeit des Luftdruckes im Gehäuse zu steuern.

2. System nach Anspruch 1, bei dem die Einrichtung zur Erzielung einer Ist-Druckgeschwindigkeit eine Drucksensoreinrichtung (20) zur Erzielung eines Ist-Drucksignales, das den Istwert des Luftdruckes im Gehäuse anzeigt, und eine Einrichtung (32) zur Erzeugung eines Ist-Druckgeschwindigkeitssignales, das proportional der Änderungsgeschwindigkeit des Istwertes des Druckes im Gehäuse ist, aufweist.

3. System nach Anspruch 2, gekennzeichnet durch eine Geschwindigkeitsverstärkereinrichtung (34) zur Verstärkung des Ist-Druckgeschwindigkeitssignales.

4. System nach Anspruch 2 oder 3, bei dem die Einrichtung zur Erzielung eines Soll-Druckgeschwindigkeitssignals eine Rechnereinrichtung (18), eine mit der Rechnereinrichtung verbundene Einrichtung, die der Rechnereinrichtung ein den Umgebungsluftdruck anzeigendes Signal aufgibt, eine Multiplexereinrichtung (108), die mit der Rechnereinrichtung zum selektiven Eingeben des Ist-Drucksignales und des Ist-Druckgeschwindigkeitssignales verbunden ist, wobei die Rechnereinrichtung so programmiert ist, daß sie das Soll-Druckgeschwindigkeitssignal berechnet, das eine vorbestimmte gesteuerte Beziehung zwischen dem Ist-Luftdruck im Gehäuse und dem umgebenden Luftdruck berechnet, sowie eine Einrichtung (19) zur Einspeisung von Ausgangssignalen aus der Rechnereinrichtung in die Einrichtung zur Erzeugung eines Druckgeschwindigkeits-Fehlersignales aufweist.

5. Einrichtung nach Anspruch 4 zur Verwendung bei einem Gehäuse mit einer Flugzeugkabine, bei der die Einrichtung zur Erzeugung eines den Umgebungsluftdruck anzeigenden Signales aufweist:
eine Luftdaten-Empfängereinrichtung (116), die die Flugdaten des Flugzeuges anzeigende Signale empfängt und speichert und die ein Empfänger-Voll-Signal nach dem Speichern, von Flugdatensignalen abgibt, und
eine ODER-Gatter (16), das mit dem Luftdatenempfänger verbunden ist und das auf das Empfänger-Voll-Signal anspricht, um ein Unterbrechungssignal an die Rechnereinrichtung für deren Betriebsunterbrechung zu geben, damit die Rechnereinrichtung im Luftdatenempfänger gespeicherte Luftdatensignale ausliest.

6. System nach Anspruch 4 oder 5, bei dem die Einrichtung zur Einspeisung von Ausgangssignalen aus der Rechner einrichtung einen Digital-Analog-Wandler (28), der mit einem Ausgang der Rechnereinrichtung verbunden ist, eine Prüf- und Halte-Schaltung (98), die mit einem Ausgang des Digital-Analog-Wandlers verbunden ist, und eine Adressen-Decodiereinrichtung, die mit einem Ausgang der Rechnereinrichung zum selektiven Aufgeben eines Triggersignales an die Prüf- und Halteschaltung verbunden ist, aufweist, damit die Prüf- und Halteschaltung den Ausgang des Digital-Analog-Wandlers immer dann prüft und festhält, wenn ihr Ausgang dem Soll-Druckgeschwindigkeitssignal entspricht.

7. System nach Ansprüchen 3 und 6, bei dem die Einrichtung zur Erzeugung eines Druckgeschwindigkeits-Fehlersignales eine erste Summierschaltung (30) mit einem ersten Eingang, der mit der Geschwindigkeitsverstärkereinrichtung (34) verbunden ist, und mit einem zweiten Eingang, der mit der Prüf- und Halteschaltung verbunden ist, aufweist, wobei die erste Summierschaltung einen Ausgang erzeugt, der eine Funktion der Differenz zwischen den Ist- und Soll-Geschwindigkeiten der Änderung des Luftdruckes innerhalb des Gehäuses ist.

8. System nach Anspruch 7, bei dem die auf das Druckgeschwindigkeitssignal zur Regelung des Luftdurchflusses durch das Gehäuse ansprechende Einrichtung ein Abflußventil (52), dessen Betriebsposition zwischen offen und geschlossen variabel ist und das den Luftdurchfluß steuert, einen Betätigungsmotor (42), der mit dem Abflußventil verbunden ist, eine Einrichtung zur Einspeisung elektrische Energie in den Betätigungsmotor, und eine Einrichtung (48, 50) zur Steuerung des Anlegens elektrischer Energie an den tätigungsmotor für eine Steuerung der Betriebsposition des Abflußventiles aufweist.

9. System nach Anspruch 8, gekennzeichnet durch eine Tachometereinrichtung (40) zur Erzeugung eines die Geschwindigkeit des Betätigungsmotors anzeigenden Signals, eine zweite Summierschaltung (38) mit einem ersten Eingang, der mit dem Ausgang der ersten Summierschaltung (30) verbunden ist, und mit einem zweiten Eingang, der mit der Tachometereinrichtung zur Aufnahme des Betätigungsmotor-Geschwindigkeitssignals daraus verbunden ist, wobei die zweite Summierschaltung ein Drehzahl-Fehlerausgangssignal erzeugt, das proportional der Differenz zwischen dem Druckgeschwindigkeits-Fehlersignal und dem Betätigungsmotor-Drehzahlsignal ist.

10. System nach Anspruch 9, bei dem die Einrichtung zur Steuerung des Anlegens elektrischer Energie an den Betätigungsmotor einen Fehlerverstärker (46), der mit dem Ausgang der zweiten Summierschaltung (38) zur Erzeugung eines Motorantriebssignales verbunden ist, eine erste Schwellenwertschaltung (48), die mit dem Fehlerverstärker verbunden ist und ein Ausgangssignal zum Antrieb des Abflußventils in die Offen-Position erzeugt, wenn das Motorantriebssignal einen vorbestimmten Wert übersteigt, und eine zweite Schwellwertschaltung (50), die mit dem Fehlerverstärker verbunden ist, um ein Ausgangssignal zum Antrieb des Abflußventiles in die Geschlossen-Position zu erzeugen, wenn das Motorantriebssignal einen vorbestimmten Wert unterschreitet, verbunden ist.

11. System nach Anspruch 10, gekennzeichnet durch ein erstes UND-Gatter (156) mit einem ersten Eingang, der mit dem Ausgang der ersten Schwellwertschaltung verbunden ist, und mit einem zweiten Eingang, der mit der Rechnereinrichtung zur Aufnahme eines Steuersignales daraus verbunden ist, und durch ein zweites UND-Gatter (158) mit einem ersten Eingang, der mit der zweiten Schwellwertschaltung verbunden ist, und einem zweiten Eingang, der mit der Rechnereinrichtung verbunden ist, um ein Steuersignal daraus aufzunehmen.

12. System nach einem der Ansprüche 8—11, bei dem die Einrichtung zur Einspeisung elektrischer Energie in den Betätigungsmotor eine elektrische Energiequelle, ein Relais (160, 168), das zwischen die elektrische Energiequelle und den Betätigungsmotor geschaltet ist, und eine logische Schaltung (134), die von der Rechnereinrichtung gesteuert wird, um das Relais zum selektiven Aufgeben elektrischer Energie an den Betätigungsmotor zu schalten, aufweist.

13. System nach einem der vorausgehenden Ansprüche, mit einer Einrichtung (68) zur Erzeugung eines Maximaldruck-Geschwindigkeitssignals, das ein maximales Druckgeschwindigkeitssignal erzeugt, das eine ausgewählte maximal zulässige Änderungsgeschwindigkeit des tatsächlichen Luftdruckes in dem Gehäuse erzeugt, sowie einer Einrichtung zur Verwendung des maximalen Druckgeschwindigkeitssignals, um zu verhindern, daß die Geschwindigkeitsänderung des Ist-Luftdruckes in dem Gehäuse die maximal zulässige Geschwindigkeit übersteigt.

14. System nach Anspruch 13 zur Verwendung in einem Gehäuse, das die Kabine eines Flugzeuges aufweist, gekennzeichnet durch eine Einrichtung (62) zur Erzeugung eines Signals, das eine ausgewählte Landefeldhöhe anzeigt, und eine Einrichtung (56), die auf das Landefeldhöhensignal und das maximale Druckgeschwindigkeitssignal anspricht, um einen vorbestimmten Wert des Kabinenluftdruckes in bezug auf den Umgebungsluftdruck aufrecht zu erhalten.

15. System zur Steuerung der Änderungsgeschwindigkeit des Gasdruckes in einem Gehäuse, gekennzeichnet durch eine Einrichtung (32) zur Feststellung des Istwertes der Änderungsgeschwindigkeit des Gasdruckes innerhalb des Gehäuses, eine Einrichtung (30) zur Erzeugung eines Druckgeschwindigkeits-Fehlersignales, das eine Funktion der festgestellten Ist-Geschwindigkeit und einer Soll-Geschwindigkeit der Änderung des Gasdruckes ist, und eine Einrichtung (42, 52) zur Regelung des Gasdurchflusses durch das Gehäuse in Abhängigkeit von dem Geschwindigkeit-Fehlersignal, um die Ist-Geschwindigkeit der Änderung des Gasdruckes auf der Soll-Änderungsgeschwindigkeit des Gasdruckes zu halten.

16. Verfahren zur Steuerung der Änderungsgeschwindigkeit des Gasdruckes in einem Gehäuse, dadurch gekennzeichnet, daß die Ist-Geschwindigkeit der Änderung des Druckes im Gehäuse festgestellt wird, daß ein Druckgeschwindigkeits-Fehlersignal dadurch erzeugt wird, daß die festgestellte Ist-Geschwindigkeit mit einer gewünschten Änderungsgeschwindigkeit des Druckes verglichen wird, und daß der Gasfluß durch gas Gehäuse in Abhängigkeit von dem Geschwindigkeits-Fehlersignal geregelt wird, um die Ist-Geschwindigkeit der Änderung des Druckes auf Soll-Geschwindigkeit der Änderung des Druckes zu halten.

17. Verfahren zur Steuerung des Luftdruckes in einer Flugzeugkabine, dadurch gekennzeichnet, daß eine Landefeld-Höhenauswähleinrichtung so eingestellt wird, daß sie ein Signal erzeugt, das eine vorbestimmte Landefeldhöhe anzeigt, die eine Autogeschwindigkeitsbegrenzungs-Auswähleinrichtung einstellt, um ein Signal zu erzeugen, das eine vorbestimmte maximal zulässige Änderungsgeschwindigkeit des Kabinenluftdruckes anzeigt, daß der Luftdruck innerhalb der Kabine festgestellt wird, um ein Signal zu erzielen, das den Istwert des Kabinenluftdruckes anzeigt, um ein Signal zu erzeugen, das den Istwert der Änderungsgeschwindigkeit des Kabinendruckes anzeigt, daß ein den Umgebungsluftdruck anzeigendes Signal aufgenommen wird, und daß die Position eines Abflußventiles in Abhängigkeit von dem Landefeld-Höhensignal, dem Istwert des Kabinenluftdrucksignales, der maximal zulässigen Änderungsgeschwindigkeit des Kabinenluftdruckes und dem Umgebungsdruck geregelt wird.

18. System nach einem der vorausgehenden Ansprüche, bei dem die Reiseflug-Höhensteuereinrichtung auf die festgestellte Flugzeughöhe anspricht und so arbeitet, daß der Druck im Gehäuse trotz Änderungen in der festgestellten Flugzeughöhe nur innerhalb bestimmter Grenzen konstant gehalten wird.

## Revendications

1. Dispositif pour le réglage de la pression d'air dans une enceinte remplie d'air, par exemple une cabine d'avion ou analogue, comprenant des moyens (42, 52) pour régler le flux d'air à travers l'enceinte de manière à maintenir la pression d'air dans l'enceinte en conformité à une caractéristique prédéterminée en fonction du temps, caractérisé par: des moyens (32) pour fournir un signal de gradient de pression effectif, indicatif de la vitesse de variation effective de la pression d'air dans l'enceinte; des moyens (26) pour fournir un signal de gradient de pression commandé, indicatif d'une vitesse de variation commandée de la pression d'air dans l'enceinte; des moyens (30) pour établir, à partir dudit signal de gradient de pression effectif et dudit signal de gradient de pression commandé, un signal d'erreur de gradient de pression qui est fonction de la différence entre les vitesses de variation effective et commandée de la pression d'air dans l'enceinte; et des moyens (44, 48, 50) qui répondent au signal d'erreur de gradient de pression pour commander les moyens de réglage (42, 52) de manière à régler la vitesse de variation effective de la pression d'air dans l'enceinte.

2. Dispositif suivant la revendication 1, dans lequel les moyens pour fournir un gradient de pression effectif comprennent: un capteur de pression (20) pour fournir un signal de pression effective, indicatif de la pression d'air effective dans l'enceinte; et des moyens (32) pour fournir un signal de gradient de pression effectif qui est proportionnel à la vitesse de variation de la pression effective dans l'enceinte.

3. Dispositif suivant la revendication 2, comprenant en outre des moyens d'amplification de gradient (34) pour amplifier le signal de gradient de pression effectif.

4. Dispositif suivant la revendication 2 ou la revendication 3, dans lequel les moyens pour fournir un signal de gradient de pression commandé comprennent: des moyens de calcul (18); des moyens connectés aux moyens de calcul pour fournir à ceux-ci un signal indicatif de la pression d'air ambiante; un multiplexeur (108) connecté aux moyens de calcul pour entrer sélectivement dans ceux-ci le signal de pression effective et le signal de gradient de pression effectif, les moyens de calcul étant programmés pour calculer un dit signal de gradient de pression commandé qui maintiendra une relation programmée prédéterminée entre la pression d'air effective dans l'enceinte et la pression d'air ambiante; et des moyens (19) pour envoyer les signaux de sortie des moyens de calculs auxdits moyens pour la production d'un signal d'erreur de gradient de pression.

5. Dispositif suivant la revendication 4 utilisable avec une enceinte comprenant une cabine d'avion, dans lequel les moyens pour fournir un signal indicatif de la pression d'air ambiante comprennent: un récepteur (116) de données d'air pour recevoir et stocker des signaux indicatifs de données de vol de l'avion, les moyens de réception de données d'air fournissant un signal de récepteur plein après mise en mémoire des signaux de données de vol; et une porte OU (16) connectée au récepteur de données d'air, la porte OU répondant au signal de récepteur plein pour fournir un signal d'interruption aux moyens de calcul afin d'interrompre leur fonctionnement de sorte que les moyens de calcul lisent les signaux de données d'air stockés dans le récepteur de données d'air.

6. Dispositif suivant la revendication 4 ou la revendication 5, dans lequel les moyens pour fournir les signaux de sortie des moyens de calcul comprennent: un convertisseur numérique-à-analogique (28) connecté à une sortie des moyens de calcul; un circuit échantillonneur et de maintien (98) connecté à une sortie du convertisseur numérique-à-analogique; et des moyens de décodage d'adresse connectés à une sortie des moyens de calcul pour appliquer sélectivement un signal de déclenchement au circuit échantillonneur et de maintien de manière à ce que le circuit échantillonneur et de maintien échantillonne et conserve la sortie du convertisseur numérique-à-analogique chaque fois que sa sortie est un dit signal de gradient de pression commandé.

8. Dispositif suivant la revendication 7, dans lequel les moyens qui répondent au signal de gradient de pression pour régler le flux d'air à travers l'enceinte comprennent une vanne de sortie (52) dont la position de fonctionnement est variable entre l'ouverture et la fermeture et règle ledit flux d'air; un moteur d'actionneur (42) accouplé à la vanne de sortie; des moyens pour alimenter le moteur d'actionneur en énergie électrique; et des moyens (48, 50) pour commander l'application de l'énergie électrique au moteur d'actionneur de manière à ce qu'il règle la position de fonctionnement de la vanne de sortie.

9. Dispositif suivant la revendication 8, comprenant en outre un tachymètre (40) pour fournir un signal indicatif de la vitesse du moteur d'actionneur; un deuxième circuit d'additon (38) comportant une première entrée connectée à la sortie du premier circuit d'addition (30) et comportant une deuxième entrée connectée au tachymètre pour recevoir de celui-ci le signal de vitesse de moteur d'actionneur, la deuxième circuit d'addition produisant un signal de sortie d'erreur de vitesse proportionnel à la différence entre le signal d'erreur de gradient de pression et le signal de vitesse de moteur d'actionneur.

10. Dispositif suivant la revendication 9, dans lequel les moyens pour commander l'application de l'énergie électrique au moteur d'actionneur comprennent: un amplificateur d'erreur (46) connecté à la sortie du deuxième circuit d'addition (38) pour produire un signal d'entraînement de moteur; un premier circuit de seuil (48) connecté à l'amplificateur d'erreur et produisant un signal de sortie pour entraîner la vanne de sortie vers l'ouverture chaque fois que la signal d'entraînement de moteur dépasse une valeur prédéterminée; et un deuxième circuit de seuil (50) connecté à l'amplificateur d'erreur et produisant un signal de sortie pour entraîner la vanne de sortie vers la fermeture chaque fois que le signal d'entraînement de moteur est inférieure à une valeur prédéterminée.

11. Dispositif suivant la revendication 10, comprenant en outre: une première port ET (156) comportant une première entrée connectée à la sortie du premier circuit de seuil et une deuxième entrée connectée aux moyens de calcul pour recevoir de ceux-ci un signal de validation; et une deuxième porte ET (158) comportant une première entrée connectée au deuxième circuit de seuil et une deuxième entrée connectée aux moyens de calcul pour en recevoir un signal de validation.

12. Dispositif suivant l'une quelconque des revendications 8 à 11, dans lequel les moyens pour la fourniture d'énergie électrique au moteur d'actionneur comprennent: une source d'énergie électrique; un relais (160, 168) connecté entre la source d'énergie électrique et le moteur d'actionneur; et un circuit logique (134) commandé par les moyens de calcul pour commuter le relais de façon à appliquer sélectivement l'énergie électrique au moteur d'actionneur.

13. Dispositif suivant l'une quelconque des revendications précédentes, comprenant des moyens (68) pour fournir un signal de gradient de pression maximal, indicatif d'une vitesse de variation maximale admissible choisie de la pression d'air effective dans l'enceinte; et des moyens pour utiliser le signal de gradient de pression maximal de manière à empêcher la vitesse de variation de la pression d'air effective dans l'enceinte de dépasser ledit gradient maximal admissible.

14. Dispositif suivant la revendication 13, utilisable avec une enceinte comprenant la cabine d'un avion et comportant: des moyens (62) pour fournir un signal indicatif d'une altitude de terrain d'atterrissage choisie, et des moyens (56) qui répondent au signal d'altitude de terrain d'atterrissage et au signal de gradient de pression maximal pour maintenir un programme prédéterminé de la pression d'air de cabine par rapport à la pression d'air ambiante.

15. Système de réglage de la vitesse de variation d'une pression de gaz dans une enceinte, caractérisé par des moyens (32) pour détecter la vitesse de variation effective de la pression de gaz dans l'enceinte; des moyens (30) pour générer un signal d'erreur de gradient de pression, ledit signal d'erreur de gradient de pression étant une fonction du gradient effectif détecté et d'une vitesse de variation désirée de la pression de gaz; et des moyens (42, 52) pour régler le flux de gaz à travers ladite enceinte en réponse audit signal d'erreur de gradient de manière à maintenir la vitesse de variation effective de la pression de gaz à ladite vitesse de variation désirée de la pression de gaz.

16. Procédé de réglage de la vitesse de variation d'une pression de gaz dans une enceinte, caractérisé par les opérations de détection de la vitesse de variation effective de la pression dans l'enceinte; génération d'un signal d'erreur de gradient de pression par comparaison de la vitesse de variation effective détectée à une vitesse de variation désirée de la pression; et réglage du flux de gaz à travers ladite enceinte en réponse audit signal d'erreur de gradient de manière à maintenir la vitesse de variation effective de la pression à ladite vitesse de variation désirée de la pression.

17. Procédé de réglage de la pression d'air dans une cabine d'avion, caractérisé par les opérations de: positionnement d'un sélecteur d'altitude de terrain d'atterrissage pour fournir un signal indicatif d'une altitude de terrain d'atterrissage prédéterminée, positionnement d'un sélecteur de limite de gradient automatique pour fournir un signal indicatif d'une vitesse de variation maximale admissible prédéterminée de la pression d'air de cabine; détection de la pression d'air dans la cabine pour obtenue un signal indicatif de la pression effective d'air de cabine produisant un signal indicatif de la vitesse de variation effective de la pression de cabine; réception d'un signal indicatif de la pression d'air ambiante; et réglage de la position d'une vanne de sortie en réponse au signal d'altitude de terrain d'atterrissage, au signal de pression effective d'air de cabine, à la vitesse de variation maximale admissible de la pression d'air de cabine et à la pression ambiante.

18. Dispositif, système ou procédé suivant l'une quelconque des revendications précédentes, dans lesquels un régulateur d'altitude de croisière répond à l'altitude d'avion détectée et agit pour maintenir constante la pression de l'enceinte malgré des variations de l'altitude d'avion détectée seulement dans des limites prédéterminées.

**Fig-1**

- STANDBY CONTROLLER — 53
- ACTUATOR MOTOR — 42
- OUT-FLOW VALVE — 52
- DRIVE OPEN SW. — 48
- DRIVE CLOSED SW. — 50
- TACH — 40
- 115VAC
- ERROR AMP — 46
- TACH DEMOD — 44
- 10
- Σ — 38 (+ / -)
- AMP — 36
- Σ — 30 (+ / -)
- CABIN PRESSURE SENSOR — 20
- $P_C$
- $\dot{P}_{CA}$
- RATE AMP — 34
- ANALOG DIFFERENTIATOR — 32
- D/A — 28
- $\dot{P}_{CC}$
- DIGITAL / ANALOG
- RATE LIMIT — 26
- A/D — 22
- OR — 16
- RATE LOGIC — 19
- MAX. PRESSURE DIFFERENTIAL
- OR — 14
- AUTO SCHEDULE CONTROLLER — 18
- OPERATING MODE SELECT — 12
  - GROUND
  - TAKEOFF
  - LANDING
  - GROUND CHECK
- $P_{ATM}$
- LDG. ALT.

**Fig-6**

ALTITUDE RELATIVE TO FIELD ELEVATION (FEET)

- 50
- 0
- -50
- -100
- -150

- 500 FPM
- 300 FPM
- -150 FT.
- 25 SEC
- 10 SEC
- ROTATION & TAKEOFF
- TAKEOFF ROLL
- DOOR CLOSE TRANSIENT

Fig-2A

Fig-2B

Fig-2C

88  DATA BUS  85

54

POWER RESET

VMA ←
ECLK ←

RESET ←—— POWER RESET

CENTRAL PROCESSING UNIT

141

I/O STROBE ONE SHOT ←—— I/O DECODE ENABLE

DATA

R/W ←— R/W    IRQ ←—— FMG ←

TIME FRAME GEN  126

RESTART FRAME

POWER RESET

WRITE 1 ——○

184

D7

7 —→ VERIFY →
6 — NO FAULT —→
5 — AC MTR. —→
4 — LOW INFLOW —→
3 — LAND. GEAR SW. —→
2 — CONTROLLER —→
1 — AC PWR. OFF —→
0 — SELECTOR —→

OUTPUT BUFFER

D0

121

AI5
AI4
AI3

7 —→ PS EPROM 1
6 —→ 2
5 —→ 3
4 —→ PS EPROM 4
3 —→ SPARE
2
1
0

E1
E2 ○
E3 ○

ECLK

E1
E2 ○
E3

7 —→ CLEAR FAULT
6 —→ ERROR READ
5 —→ READ/SHIFT
4 —→ DIG. READ
3 —→ DIG. READ
2 —→ DIG. READ
1 —→ SPARE
0 —→ ENABLE RAM

104

D7

7 — SELECT
6 — LOW FLOW
5 — DISENGAGE
4 — DRIVE ENABLE
3 — SPARE
2 — SAMPLE/HOLD
1 — MAINT. DATA
0 — MAINT. CLOCK

I/O DECODE ENABLE

D0

WRITE 2 ——○

113

120

E2 ○
E1
E3

7 —→ ACTIVATE RELAY
6 —→ EAROM WRITE
5 —→ DIGITAL WRITE
4 —→ DIGITAL WRITE
3 —→ RESET
2 —→ RESTART FRAME
1 —→ LOAD DAC MSB/MUX
0 —→ LOAD DAC LSB

VMA →

A'12
A'11
A'10

FIG-3

Fig. 5

Fig. 7

6

FIG-4

Fig. 8a.

Fig. 8b.

Fig. 10.

```
        ┌──────────────┐
        │ TAKEOFF MODE │
        └──────┬───────┘
               │
               ▼
   ┌─────────────────────────────┐
   │ P_C (TARGET) = P_C -0.2 IN. HG │
   └──────────────┬──────────────┘
                  │
                  ▼
   ┌─────────────────────────────┐
   │ PDOTLIM = -0.05 IN. HG/MIN  │
   └──────────────┬──────────────┘
```

FIG.11

EXIT TAKEOFF

WOW = 1 ?  NO  
YES

VERSW = 0 ?  YES  
NO

DCS = 1 ?  YES ... NO

FLIGHT MODE

UPON INITIAL ENTRY:

CRUISE CLAMP IS IN ZERO STATE

$P_{DESTINATION} = P_{CABIN}$ PRESSURE AT INITIALIZATION

$H_{MAX (DD)} = H_{CRUISE CLAMP} = H_{TAKEOFF FIELD}$

INITIALIZE CRUISE CLAMP TIMER: $T_{CC} = 0$

(A) → DESCENT DETECT OR MANUAL DESTINATION OR CRUISE CLAMP IN EFFECT ? — YES → $P_{DESTINATION} = P_{LDG (ACTUAL)}$

$H_{MAX (DD)} = MAX \left[ H_{MAX (DD)}, H_{ARINC} \right]$

**FIG.12A**

$H_{MAX (DD)} > H_{ARINC} + 500 FT$ — NO

YES

ACTIVATE DESCENT DETECT

(B)

FIG.12B

C

DESCENT DETECT ACTIVE $\underline{AND}$ $P_C$ (TARGET) $=$ $P_{DESTINATION}$ ?

NO

YES

$|P_{CABIN} - P_{DESTINATION}| < 0.21N.HG$ $\underline{AND}$ $P_{DIF}$ NOT SATURATED ?

NO

YES

ACTIVATE DIFFERENTIAL CHANNEL CONTROLLED OPERATION

EXECUTE RATE CONTROL INCREMENT $T_{CC}$

FIG.12C

D

FIG.12D

FIG.12E

KI = 2 (IN. HG/MIN)/IN. HG
K2 = 22(IN. HG/MIN)/IN. HG/IN. HG
RL IS SELECTED PRESSURE LIMIT AND
IS NOMINALLY -0.54 IN. HG/MIN

DIFFERENTIAL CHANNEL OPERATIONAL ?

YES → PCERR DETERMINED BY DIFFERENTIAL CHANNEL ROUTINE

NO

$PCERR = P_C - P_{C(TARGET)}$

IS $P_C$(TARGET) SET TO $P_{DESTINATION}$ AND $P_C < P_{SCHEDULE}$ AND DESCENT DETECT AND MANUAL DESTINATION INACTIVE ?

YES (DECREASE $P_C$)

$PDOTLIM = \dfrac{RL}{2}$
$K = KI$

NO

$P_C - P_A > 17.712$ IN. HG ?

YES (DECREASE $P_C$)

NO

$K = -\left[(P_C - P_A - 17.712) \cdot K2 + KI\right]$
$PDOTLIM = MAX \left| \left[-(P_C - P_A - 17.712) \cdot 13.25 + RL\right]; -2.1625 \right|$

$PDOTLIM = RL$
$K = -KI$

A

FIG.13B

FIG.14

Fig 15a.

GROUND CHECK

ARINC AVAILABLE ? — NO

YES

$\left| P_C - P_A (\text{FROM ARINC}) \right| > 0.3 \text{ IN HG}$ ? — YES

REGISTER $P_C$ SENSOR FAULT

NO

SET 15 - SEC TIMER 5

WOW = 0 ? — YES

NO

DECREMENT TIMER 5

DCS = 0 ? — YES

NO

TIMER 5 = 0 ? — NO

YES

Fig. 15b.

**0 080 849**

GROUND TEST

SET 30-SEC TIMER 5

WOW = 0 ? — YES

NO

DCS = 0 ? — YES

NO

ALTERNATE CONTROLLER CONTROLLING ?

YES

NO

DECREMENT TIMER 5

TIMER 5 = 0 ? — NO

ARINC AVAILABLE ? — NO

YES

$\left| P_C - P_A \text{ (FROM ARINC)} \right| > 0.2$ IN. HG ? — YES

NO

SET:
$P_C$ (TARGET) $= P_C + 0.54$ IN. HG
PDOTLIM $= 0.324$ IN. HG/MIN

SET 10-SEC TIMER 4

WOW = 0 ? — YES

NO

DECREMENT TIMER 4

DCS = 0 ? — YES

22

Fig. 16b.